# EUROPÄISCHE PATENTSCHRIFT

(11) **EP 2 373 537 B1**
(45) Veröffentlichungstag und Bekanntmachung des Hinweises auf die Patenterteilung: **13.02.2013**
(21) Anmeldenummer: 09795732.8
(22) Anmeldetag: 02.12.2009
(51) Int. Cl.: B62M 11/14, B62M 11/10

(54) **MEHRGANG-GETRIEBE FÜR FAHRRÄDER**
MULTI-GEAR TRANSMISSION FOR BICYCLES
TRANSMISSION À PLUSIEURS RAPPORTS POUR BICYCLETTES

(30) Priorität: 06.12.2008 DE 102008060856
(43) Veröffentlichungstag der Anmeldung: 12.10.2011
(73) Patentinhaber: Eisenbeil, Eckhardt, 86157 Augsburg (DE)
(72) Erfinder: Eisenbeil, Eckhardt, 86157 Augsburg (DE)
(74) Vertreter: Charrier, Rapp & Liebau
(86) Internationale Anmeldenummer: PCT/EP2009/066259
(87) Internationale Veröffentlichungsnummer: WO 2010/063770

(56) Entgegenhaltungen:
- WO-A1-2004/042252
- US-A- 1 069 004
- US-A- 5 622 081
- US-A1- 2007 044 585
- US-B1- 7 434 489

## Beschreibung

Die Erfindung betrifft ein Mehrgang-Getriebe für Fahrräder, das zur Bereitstellung unterschiedlicher Übersetzungsverhältnisse mindestens zwei Kronenradgetriebe enthält.

Es sind bereits Mehrgang-Getriebe für Fahrräder bekannt, die ein oder mehrere Planetengetriebe mit jeweils einem Sonnenrad, einem mit ein- oder mehrstufigen Planetenrädern bestückten Planetenträger und einem Hohlrad aufweisen. Bei diesen Getrieben sind die Drehachsen der Getriebeelemente parallel zur Nabenachse angeordnet. Im Falle dieser klassischen Planetengetriebe ergibt sich die Zähnezahl eines Rades bei vordefinierter räumlicher Position der Achsen aus den Zähnezahlen der anderen beiden beteiligten Zahnräder. Somit ist im Falle mehrstufiger Planetenräder, die mit mehr als einem Sonnenrad und mehr als einem Hohlrad im Eingriff sind, die Unabhängigkeit der Zähnezahlen durch die räumliche Festlegung der Planetenachsen nicht mehr gegeben. Dies führt dazu, dass bei gegebenen Einbaumaßen, die Anzahl ergonomisch sinnvoller Übersetzungen und Abstufungen begrenzt ist.

Diese Einschränkung kann durch Verwendung von Kronenradgetrieben weitgehend gemindert werden. Ein großer Vorteil der Kronenradgetriebe ist die axiale Ritzelfreiheit. Das bedeutet im Falle eines zylindrischen Ritzels, dass sich das Ritzel in axialer Richtung frei über die Verzahnung bewegen oder ein Ritzel mit mehreren frei drehenden Kronenrädern kämmen kann. Ein weiterer Vorteil ist die Verwirklichung großer Übersetzungen in einer Stufe mit einem Wirkungsgrad, der mit dem eines Stirn- oder Kegelradgetriebes vergleichbar ist. Im Unterschied zum Kegelradgetriebe entstehen dabei keine axialen Kräfte, die durch erhöhte Lagerreibung den Wirkungsgrad verschlechtern.

Im Falle eines Kronenradgetriebes, das aus zwei Kronenrädern und einem dazwischen liegenden zylindrischen Gerad- oder Schrägstirnrad als Ritzel besteht, können die Durchmesser der Kronenräder und somit die Zähnezahlen der Kronenräder unabhängig voneinander in relativ großen Bereichen variiert werden, ohne dabei die räumlich vorgegebene Position der Achsen zu verändern.

Es sind eine Vielzahl von Erfindungen im Bereich der Fahrradgetriebe bekannt, die entweder echte Kronenradgetriebe oder Getriebe enthalten, deren Funktionsweise der eines Kronenradgetriebes gleich kommt. Am häufigsten sind Konfigurationen anzutreffen, bei denen der Antrieb durch die Tretkurbel erfolgt und der Abtrieb die Hinterradnabe antreibt. An- und Abtrieb erfolgt somit nicht auf der gleichen Achse. Jedes dieser Getriebe besteht aus mehreren konzentrisch angeordneten Zahnreihen und einem oder mehreren Ritzel.

Diese Art von Getrieben können in zwei Kategorien eingeteilt werden:

| | |
|---|---|
| **Kategorie A:** | Die Realisierung unterschiedlicher Gänge erfolgt durch die aktive Beteiligung des Ritzels |
| **Kategorie B:** | Die Realisierung unterschiedlicher Gänge erfolgt durch die aktive Beteiligung der Kronenräder |

Kategorie A kann weiterhin in zwei Unterkategorien eingeteilt werden:

| | |
|---|---|
| **Kat. A1:** | Jedes Ritzel ist im permanentem Eingriff mit einem entsprechenden Kronenrad. Indem jedes einzelne Ritzel über einen entsprechenden Schaltmechanismus selektiv mit der Ritzelachse drehfest verbunden werden kann, kommen unterschiedliche Übersetzungen zustande. Durch das übertragene Moment wirkt nun die Ritzelachse als Welle. Da zur Momentübertragung nur ein Ritzel verwendet wird, muss sowohl das Kronenrad als auch das Ritzel entsprechend dimensioniert werden. Dafür muss in der Regel ein höheres Gewicht in Kauf genommen werden. Erfindungen dieser Art sind in WO 2007 015609A1 oder US 2004/043852 A1 beschrieben. |
| **Kat. A2:** | Die Ritzel sind während des Schaltvorgangs entweder gar nicht oder nur teilweise mit einem Kronenrad im Eingriff. Der große Nachteil dieser Getriebe ist die Notwendigkeit der Unterbrechung der Momentübertragung. Speziell im schwierigen Gelände ist dieses Verhalten unerwünscht. Erfindungen dieser Art sind in WO 2004 042252A1, US6155127, US7434489 oder US5005438 beschrieben. |

Getriebe der Kategorie B enthalten mehrere konzentrische, in Achsrichtung unabhängig voneinander verschiebbare Kronenräder, die mit einem Ritzel in Eingriff gebracht werden.

Dabei wird durch ein Schaltmechanismus eines der Kronenräder axial zum Ritzel hin verschoben und in Eingriff gebracht. Die unterschiedlichen Übersetzungen ergeben sich aus dem Durchmesserunterschied der Kronenräder. Durch zusätzliche Ritzelabstufung kann die entsprechende Gangübersetzung fein abgestimmt werden. Erfindungen dieser Art sind in W02004/028891 A1 oder US 6827362 B2 beschrieben.

Aufgabe der Erfindung ist es, bei einem Mehrgang-Getriebe für Fahrräder die maximale Anzahl möglicher Übersetzungen auf möglichst geringem Bauraum unterzubringen.

Diese Aufgabe wird erfindungsgemäß durch ein Mehrgang-Getriebe mit den Merkmalen des Anspruchs 1 oder 20 gelöst. Zweckmäßige Ausgestaltungen und vorteilhafte Ausführungsformen der Erfindung sind Gegenstand der Unteransprüche.

Das erfindungsgemäße Mehrgang-Getriebe enthält zur Bereitstellung unterschiedlicher Übersetzungsverhältnisse mindestens zwei Kronenradgetriebe mit mindestens zwei zur Getriebeachse konzentrisch angeordneten Kronenrädern, eine Schalteinrichtung zur wählbaren Verbindung der Kronenräder mit feststehenden und/oder rotierenden Getriebeelementen und mehrere identische, zwischen den Kronenrädern angeordnete Ritzel, die auf jeweils einem oder einem gemeinsamen Ritzelträger um zur Drehachse der Kronenräder senkrechte Achsen drehbar gelagert und im permanenten Eingriff mit den Kronenrädern sind. Die beiden Kronenradgetriebe weisen eine gemeinsame Drehachse auf und jedes Ritzel des bzw. der Ritzelträger steht im permanenten Eingriff mit mindestens zwei Kronenrädern. Dabei kann das Mehrgang-Getriebe in einer Nabenhülse oder einem Tretlager untergebracht sein.

Weitere Besonderheiten und Vorzüge der Erfindung ergeben sich aus der folgenden Beschreibung einiger Ausführungsbeispiele anhand der Zeichnung. Es zeigen:
- **Fig. 1**: eine Prinzipskizze eines Planeten- und Kronenradgetriebes mit max. Übersetzung;
- **Fig. 2**: eine Prinzipskizze eines Planeten- und Kronenradgetriebes mit min. Übersetzung;
- **Fig. 3**: eine Prinzipskizze eines 9-Gang Koppelgetriebes;
- **Fig. 4**: eine Prinzipskizze eines 18-Gang Getriebes mit einem Koppelgetriebe
- **Fig. 5**: eine Prinzipskizze eines 14-Gang Getriebes in einer Schaltvariante 1;
- **Fig. 6**: eine Prinzipskizze eines 18-Gang Getriebes in einer Schaltvariante 2;
- **Fig. 7**: eine Prinzipskizze eines 9-Gang Getriebes in einer Schaltvariante 3 mit dem Antrieb über den Ritzelträger;
- **Fig. 8**: einen vereinfachten Getriebequerschnitt;
- **Fig. 9**: einen vereinfachten 18-Gang-Getriebelängsschnitt;
- **Fig. 10**: eine Explosionsansicht der Schaltvariante 1;
- **Fig. 11**: eine axiale Steuerung eines Kupplungsrings;
- **Fig. 12 bis 14**: einen Schnittverlauf und Teilschnitte für die Schaltvariante 1;
- **Fig. 15**: einen vereinfachten 14-Gang Getriebelängsschnitt;
- **Fig. 16**: eine Explosionsansicht der Schaltvariante 2;
- **Fig. 17 bis Fig. 20**: einen Schnittverlauf und Teilschnitte für die Schaltvariante 2;
- **Fig. 21**: eine Prinzipskizze eines 7-Gang Getriebes für das Tretlager;
- **Fig. 22**: einen 7-Gang Getriebelängsschnitt für das Tretlager;
- **Fig. 23**: eine Explosionsansicht der Schaltvariante für das Tretlager;
- **Fig. 24**: eine Prinzipskizze eines Mehrgang-Getriebes mit zwei Minus-Kronenradgetrieben und
- **Fig. 25**: eine Prinzipskizze eines 18-Gang Getriebes mit drei ungekoppelten Kronenradgetrieben.

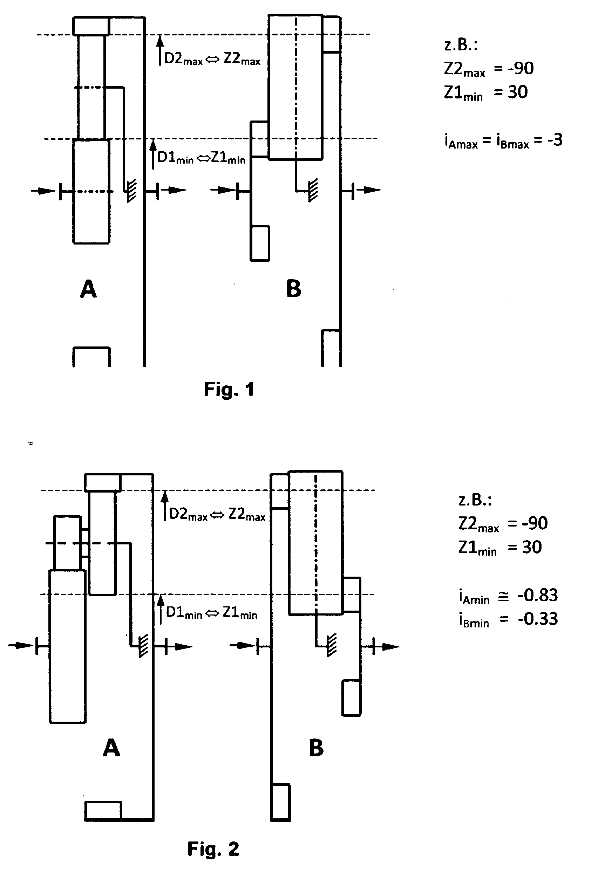

In den Figuren 1 und 2 ist eine Gegenüberstellung eines Planetengetriebes (Ausführung A) und eines Kronenradgetriebes (Ausführung B) gezeigt, wobei beide Getriebe als Minusgetriebe ausgeführt sind. Figur 1 zeigt die Dimension der Getriebeelemente entsprechend der maximalen Übersetzung und Figur 2 entsprechend der minimalen Übersetzung. Dabei ist ersichtlich, dass im Falle der Beispielszähnezahlen (Z2ₘₐₓ = -90, Z1ₘᵢₙ = 30), der mögliche Übersetzungsbereich des Kronenradgetriebes mit i_{B} = -0.33 ... -3 wesentlich größer ist als der des Planetengetriebes mit i_{A} = -0.83 ... -3. Somit wächst die Auswahl sinnvoller Abstufungen bei vorgegebenem Bauraum. Zusätzlich wird durch den Breitenversatz der Kronenräder die Möglichkeit gegeben, den Durchmesser des Kronenrades bei gleich bleibender Zähnezahl innerhalb eines Intervalls zu variieren, so dass sich die diametrale Ausbreitung des Kronenrades nicht unbedingt als Einschränkung erweist. Dies erlaubt eine Erweiterung des konstruktiven Spielraums im Falle einer konzentrischen Anordnung mehrerer Kronenräder. Durch Abstufung des Ritzels im Bereich des Zahneingriffs kann ebenfalls Einfluss auf das Übersetzungsverhältnis genommen werden. Das ist jedoch nur in einem kleinen Bereich sinnvoll, um die axiale Abmessung des Kronenradgetriebes, d.h. entlang der Nabenachse, klein zu halten. Der Nachteil größerer Abmessungen in axialer Richtung (entlang der Drehachse) der Kronenradgetriebe im Vergleich zu den Planetengetrieben relativiert sich beim an- oder abtriebseitigen Einsatz von mehreren, konzentrisch zur Drehachse angeordneten Kronenrädern mit entsprechender Schaltvorrichtung.

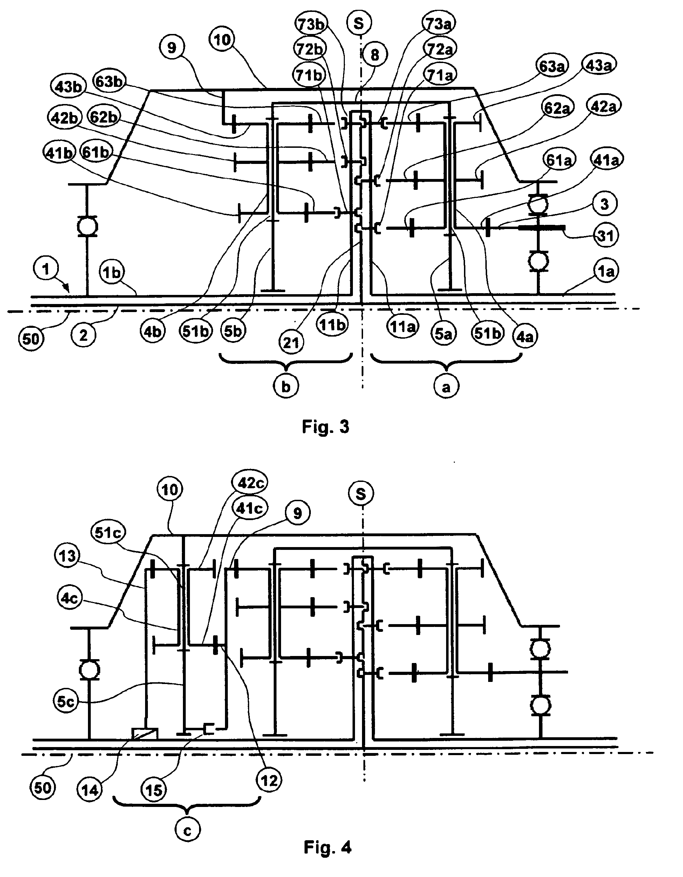

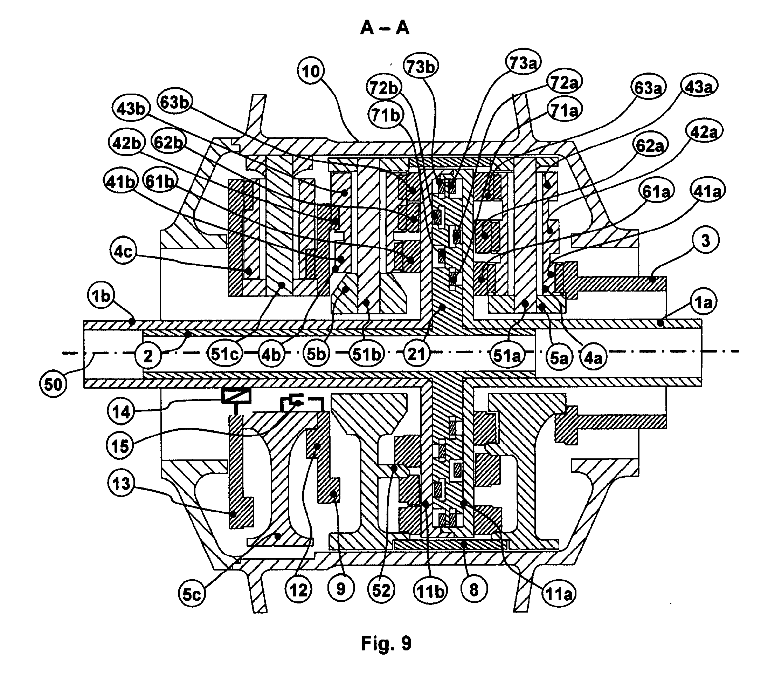

Die Funktionsweise des erfindungsgemäßen Mehrgang-Getriebes soll anhand eines in Figur 3 als Prinzipskizze und eines in Figur 9 in einer Schnittdarstellung gezeigten Mehrgang-Getriebes erläutert werden. Bei dieser Ausführung ist das Mehrgang-Getriebe in eine Nabenhülse 10 integriert, welche auf einer mit einem Fahrradrahmen starr verbundenen Getriebeachse 1 drehbar gelagert ist. Auf die Darstellung der Lagerung, Dichtungen, Verschraubungen oder sonstiger im Fahrrad-Getriebebau vorkommender Elemente wurde weitgehend verzichtet, da diese dem Fachmann bekannt sind. Die Getriebeachse 1 besteht beim gezeigten Ausführungsbeispiel aus zwei hohlen Achshälften 1a und 1b und zwei in einer Ebene S miteinander verbundenen Achsscheiben 11a und 11b. Die beiden Achsscheiben 11a und 11b sind zweckmäßigerweise einteilig mit den jeweiligen hohlen Achshälften 1a bzw. 1b ausgeführt. Die beiden hohlen Achshälften 1a und 1b sind an den Achsscheiben 11 a und 11b formschlüssig, biegesteif und verdrehfest miteinander verbunden.

Innerhalb der Getriebeachse 1 ist eine Schalteinrichtung mit einer in den Achshälften 1a und 1b angeordneten Schalthülse 2, einer innerhalb der Achsscheiben 11 a und 11b angeordneten Schaltscheibe 21 und Kupplungselementen 71a, 72a, 73a bzw. 71b, 72b und 73b untergebracht. Die Schaltscheibe 21 ist zweckmäßigerweise einteilig mit der Schalthülse 2 ausgeführt. An den beiden Außenseiten des Achsscheiben 11a und 11b sind jeweils drei zur Getriebeachse 1 konzentrische Kronenräder 61a, 62a, 63a bzw. 61b, 62b und 63b mit unterschiedlichen Durchmessern angeordnet. Durch die Schalteinrichtung können die Kupplungselemente 71a, 72a, 73a bzw. 71b, 72b und 73b wahlweise so geschaltet werden, dass der Freilauf eines der Kronenräder 61a, 62a, 63a bzw. 61b, 62b und 63b in mindestens einer Richtung verhindert wird. Dabei können als Kupplungselemente Klinken, Zahnscheiben, Klemmkörper, oder Klauen zum Einsatz kommen.

Die in den Figuren 3 und 9 rechts angeordneten Kronenräder 61a, 62a und 63a stehen in ständigem Eingriff mit drei Ritzelstufen 41 a, 42a und 43a mehrerer in Umfangsrichtung gleichmäßig verteilter dreistufiger erster Ritzel 4a, die auf einem innerhalb der Nabenhülse 10 drehbar gelagerten ersten Ritzelträger 5a um zur Drehachse der Kronenräder 61 a, 62a und 63a senkrechte Achsen 51a drehbar gelagert sind. Die links angeordneten Kronenräder 61 b, 62b und 63b stehen in ständigem Eingriff mit drei Ritzelstufen 41b, 42b und 43c dreier in Umfangsrichtung gleichmäßig verteilter dreistufiger zweiter Ritzel 4b, die auf einem innerhalb der Nabenhülse 10 drehbar gelagerten zweiten Ritzelträger 5b um zur Drehachse der Kronenräder 61b, 62b und 63b senkrechte Achsen 51b drehbar gelagert sind. Beim gezeigten Ausführungsbeispiel sind an den Ritzelträger 5a und 5b jeweils vier Ritzel 4a bzw. 4b mit den drei Ritzelstufen 41a, 42a und 43a bzw. 41b, 42b und 43c auf den sonnenstrahlartig angeordneten Achsen 51a bzw. 51b drehbar gelagert. Abhängig von dem zu übertragenden Moment können die Ritzelträger 5a und 5b jedoch auch eine andere Achsenanzahl aufweisen.

Bei der in Figur 3 gezeigten Ausführung steht die Verzahnung 41 a der ersten dreistufigen Ritzel 4a in Eingriff mit einem antriebsseitigen Kronenrad 3, das durch einen Antreiber 31 drehbar ist. Die Ritzel 4b stehen über die Ritzelstufe 43b in Eingriff mit einem abtriebsseitigen Kronenrad 9, das mit der Nabenhülse 10 verbunden ist. Die. Ritzel 4a bilden zusammen mit dem antriebsseitigen Kronenrad 3 und den Kronenrädern 61 a, 62a und 63a ein erstes Kronenradgetriebe a, während die Ritzel 4b zusammen mit den Kronenrädern 61 b, 62b, 63b und dem abtriebsseitigen Kronenrad 9 ein zweites Kronenradgetriebe b bilden. Die beiden Kronenradgetriebe a und b weisen eine gemeinsame Drehachse 50 auf und sind über eine zwischen den Ritzelträgern 5a und 5b angeordnete Verbindungshülse 8 miteinander gekoppelt.

Das Kronenradgetriebe a wird über die Ritzelstufe 41 a vom Antriebskronenrad 3 angetrieben. Der Abtrieb erfolgt durch den Ritzelträger 5a in die Verbindungshülse 8. Die Kronenräder 61a, 62a, 63a sind ständig mit den entsprechenden Ritzelstufen 41a, 42a, 43a des Ritzels 4a im Eingriff. Die unterschiedlichen Übersetzungsverhältnisse werden dadurch realisiert, dass der Freilauf eines der Kronenräder 61a, 62a oder 63a über das entsprechenden Schaltkupplungselement 71 a, 72a oder 73a verhindert wird. In diesem Fall, ist das gekuppelte Kronenrad 61 a, 62a oder 63a in einer Richtung drehsteif mit der Achsscheibe 11 a verbunden. Somit können im Falle eines Kronenradgetriebes mit drei Kronenrädern drei Übersetzungen realisiert werden.

Das Kronenradgetriebe b funktioniert analog dem Kronenradgetriebe a mit dem Unterschied, dass Antrieb- und Abtriebselemente vertauscht wurde. Das bedeutet, dass der Antrieb über den Ritzelträger 5b und der Abtrieb über das abtriebsseitige Kronenrad 9 erfolgt. Das abtriebsseitige Kronenrad 9 ist fest mit der Nabenhülse 10 verbunden. Somit wird die Nabenhülse 10 in eine Drehbewegung relativ zur Getriebeachse 1 versetzt.

Die Gesamtanzahl der Übersetzungen ergibt sich über die Multiplikation der Übersetzungsmöglichkeiten der Einzelgetriebe. Bei der in Figur 3 gezeigten Ausführung wären damit 3 x 3 = 9 Übersetzungen und somit 9 Gänge möglich. Dabei entsteht die Übersetzung des Gesamtgetriebes aus dem Zusammenspiel der beiden Kronenradgetriebe a und b. Theoretisch können im vorliegendem Beispiel sechs weitere Gänge realisiert werden, wenn durch zusätzliche axiale Schaltkupplungen einmal das antriebsseitige Kronenrad 3 mit dem Ritzelträger 5a und einmal der Ritzelträger 5b mit dem Abtriebsrad 9 gekoppelt wird. Bei jeder dieser Kopplungen wird das jeweilige Kronenradgetriebe in seiner Übersetzungsfunktion blockiert, so dass sich ein Übersetzungsverhältnis von 1:1 ergibt. Somit wären theoretisch insgesamt 3 x 3 + 3 + 3 = 15 Gänge möglich. Bei Verwendung von zwei konzentrischen Kronenrädern pro Kronenradgetriebe können die zusätzlichen teildirekten Gänge eine Vielzahl sinnvoller Abstufungen ergeben (Siehe Tabellen 6, 7, 8). Bei mehr als zwei konzentrischen Kronenrädern pro Kronenradgetriebe ist die Generierung einer sinnvollen Gangabstufung innerhalb des üblichen Bauraums nur durch Überspringen von Gängen möglich (Siehe Tabelle 8). Weiterhin werden Getriebegänge, die durch Ausschalten eines Kronenradgetriebes (Übersetzung =1) realisiert werden, als teildirekte Gänge bezeichnet.

Eine Verdopplung der Ganganzahl ist möglich, wenn eine weitere Getriebestufe nachgeschaltet wird. Die Verdopplung der Gangzahl kann durch ein z.B. in der EP 0 915 800 B1 beschriebenes Planetengetriebe oder durch ein in Figur 4 dargestelltes weiteres Kronenradgetriebe c realisiert werden. In der Regel wird dieses nachgeschaltete Getriebe c als Untersetzungsgetriebe so ausgelegt, dass sich die Übersetzungsverhältnisse mit und ohne nachgeschaltetem Getriebe nicht überschneiden. Wie auch aus Figur 9 hervorgeht, wird das Kronenrad 9 im Unterschied zur Ausführung von Figur 3 nicht mehr mit der Nabenhülse 10, sondern starr mit einem weiteren Kronenrad 12 verbunden. Dieses treibt ein- oder mehrstufige dritte Ritzel 4c an, welche auf den Achsen 51c eines mit der Nabenhülse 10 fest verbundenen dritten Ritzelträgers 5c drehbar gelagert sind. Die dritten Ritzel 4c sind gemäß Figur 4 über eine erste Ritzelstufe 41c mit dem Kronenrad 12 in Eingriff und über eine zweite Ritzelstufe 42c an einem weiteren Kronenrad 13 abgestützt. Dieses Kronenrad 13 ist mit der Nabenachse 1 über einen Freilauf 14 verbunden. Über eine Schaltkupplung 15 ist das Kronenrad 12 mit dem Ritzelträger 5c koppelbar. Durch die Abstützung der Ritzelstufe 42c am Kronenrad 13 wird der Ritzelträger 5c in eine Drehbewegung versetzt. Durch die feste Verbindung von Ritzelträger 5c und Nabenhülse 10 wird die Rotation des Ritzelträgers 5c auf die Nabenhülse 10 übertragen. Die Abstützung des Ritzels 4c am Kronenrad 13 ist dadurch möglich, dass das Kronenrad 13 mit der als Nabenachse ausgeführten Getriebeachse 1 über den Freilauf 14 verbunden ist. Der Freilauf 14 blockiert, wenn die Schaltkupplung 15 nicht aktiv ist und ein Lastmoment an der Nabenhülse 10 anliegt. Wird die Schaltkupplung 15 aktiviert, wird das Kronenrad 12 drehsteif dem Ritzelträger 5c verbunden, der seinerseits mit der Nabenhülse 10 drehsteif verbunden ist und somit ohne Übersetzung die Nabenhülse 10 antreibt. Das Ritzel 4c wird in diesem Fall blockiert und zwingt dem Kronenrad 13 die Bewegung des Ritzelträgers 5c auf. Da jedoch nun der Freilauf aktiv wird, kommt es nicht zur Blockade des Getriebes. Das gesamte Kronenradgetriebe c kann in diesem Fall als starre Verbindung zwischen dem Kronenrad 12 und der Nabenhülse 10 gesehen werden. In diesem Fall verhält sich das Getriebe aus Figur 4 gleich dem Getriebe aus Figur 3. Anstelle der beschriebenen Kopplung Kronenrad-Ritzelträger können mit demselben Effekt auch die beiden Kronenräder 12 und 13 gekoppelt werden.

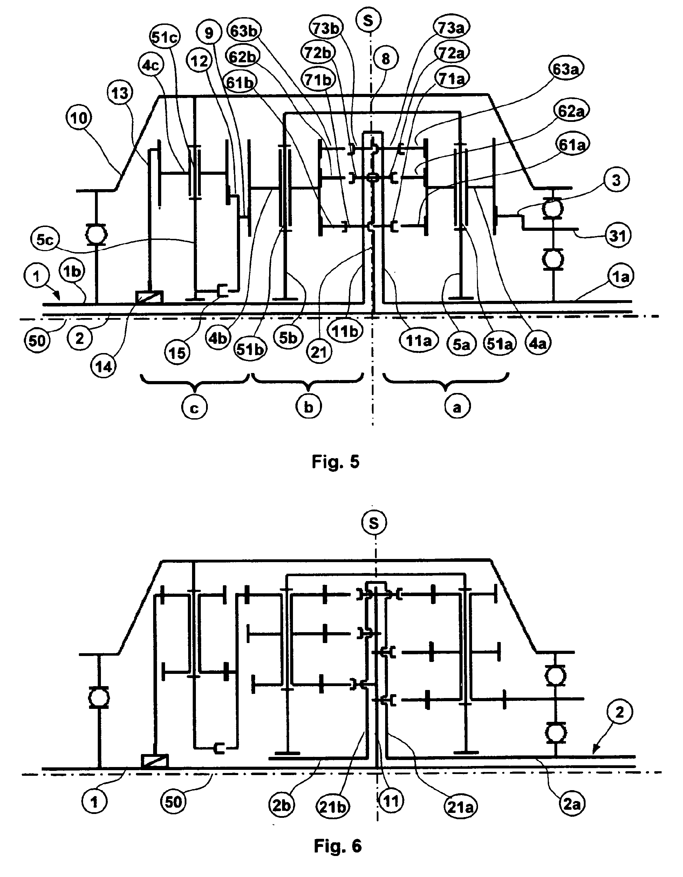

Ein Sonderfall des Getriebes aus Figur 4 stellt der Fall dar, in welchem die Kronenradgetriebe a und b gleiche Zähnezahlen der Kronenräder und der Ritzel aufweisen. Von den vorher 9 Gängen, haben nun 3 Gänge das Übersetzungsverhältnis 1:1 und werden zu einem Gang zusammengefasst. Dadurch wird das 18-Gang Getriebe aus Figur 4 zum 14-Gang Getriebe nach Figur 5 mit den Kronenradgetrieben a und b.

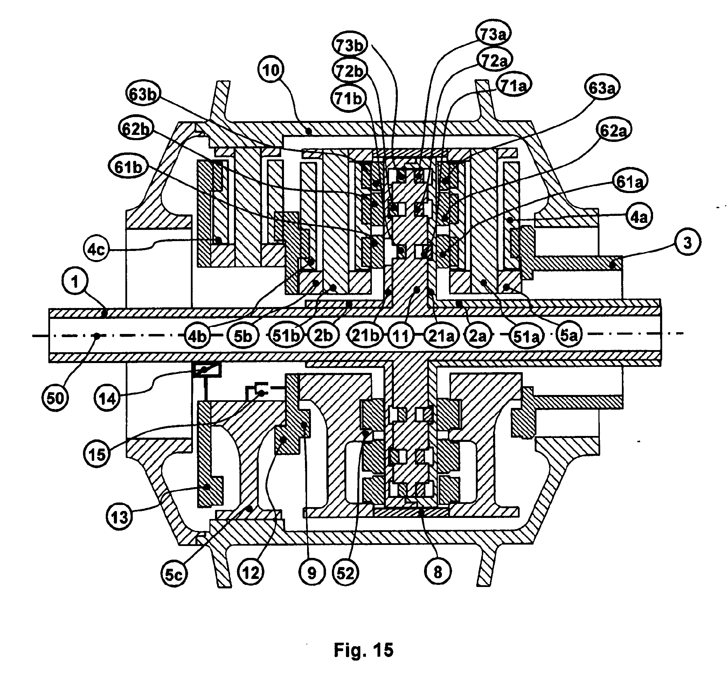

Figur 3 zeigt eine Schaltung, bei welcher die Schalthülse 2 innerhalb der Getriebeachse 1 liegt. Diese Schaltvariante wird im Folgenden als Schaltvariante 1 bezeichnet. Eine weitere Schaltvariante entsteht, wenn die Schalthülse 2 die Getriebeachse 1 umschließt (Figuren 6 und 15). In diesem Fall besteht die Schalthülse 2 aus den Teilen 2a und 2b die zur Ebene S hin in den Schaltscheiben 21a und 21b enden. Die Schalthülse 2a und 2b und die entsprechende Schaltscheibe 21a bzw. 21b sind im Idealfall aus einem Stück gefertigt. Die beiden Schaltscheiben 21a und 21b sind drehfest jedoch nicht zwingend biegesteif miteinander verbunden. Zwischen den beiden Schaltscheiben 21a und 21b befindet sich die Achsscheibe 11, die starr mir der Getriebeachse 1 verbunden ist. Diese Schaltvariante wird im Folgenden als Schaltvariante 2 bezeichnet.

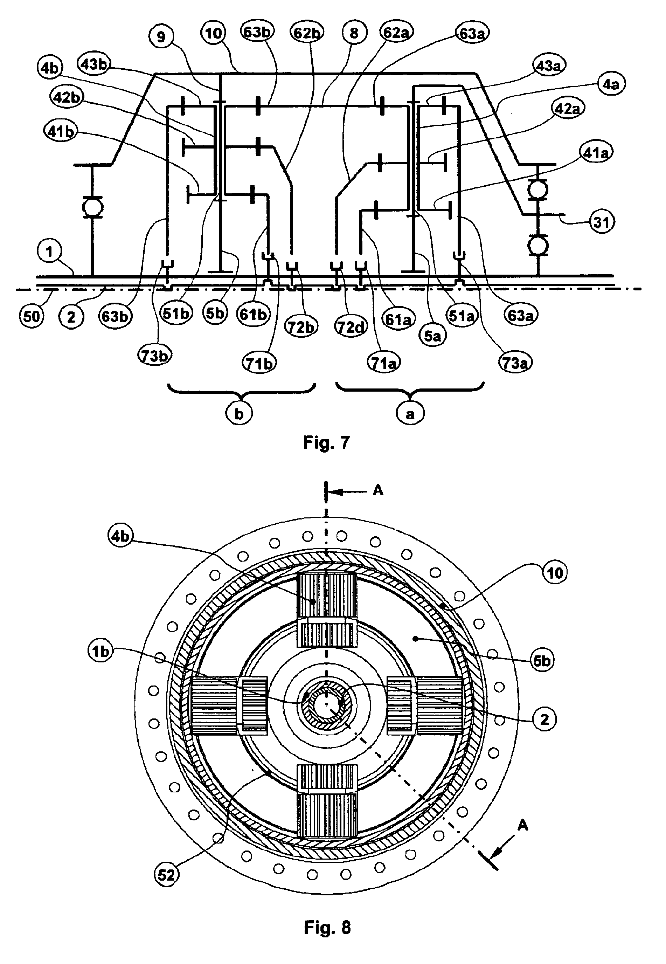

Alternativ zur Drehmomenteinleitung über das Kronenrad 3 gibt es die Möglichkeit des Antriebs über den Ritzelträger 5a. (Figur 7). In diesem Fall wird die Verbindung der Kronenradgetriebe a und b über gekoppelte Kronenräder realisiert. Im Idealfall besteht diese Verbindung aus einer Hülse 8, deren Enden als Kronenräder ausgebildet sind. Um eine weitere Schaltmöglichkeit aufzuzeigen, erfolgt die Schaltung des Getriebes aus Figur 7 nicht wie bisher beschrieben, über Schaltscheiben, sondern über eine in der Getriebeachse 1 verlaufende, hohle Nockenwelle 20 die zur Steuerung von Sperrklinken dient. Diese Schaltmöglichkeit wird als Schaltvariante 3 bezeichnet und ist im Fahrrad-Getriebebau als solches bekannt.

Figur 9 stellt eine vereinfachte, mögliche Ausführung eines 18-Gang Getriebes im Längsschnitt dar. Die Nummerierung der Bauteile entspricht weitgehend jener aus Figur 3 und Figur 4. Bei der Verwendung von drei oder mehr als vier Ritzeln pro Ritzelträger erfolgt eine automatische Zentrierung derjenigen Kronenräder, die sich mit den Ritzeln im Eingriff befinden. In einer 4-Ritzel Konstellation kann eine Zentrierung mit zylindrischen Ausbuchtungen 52 des Ritzelträgers erfolgen, so wie sie im Getriebe-Querschnitt (Figur 8) oder im Getriebe-Längsschnitt (Figur 9) zu sehen sind. Alternativ dazu kann ein Ring benutzt werden, der radial im Ritzelträger eingebettet ist.

Für die radiale Lagerung der Kronenräder oder der Ritzelträger um die Nabenachse reicht es bei einer ungeraden Anzahl von mehreren Ritzeln pro Ritzelträger theoretisch aus, nur ein Element (Kronenrad oder Ritzelträger) des Kronenradgetriebes radial zu lagern, da zwischen Kronenrad und Ritzeln eine Autozentrierung stattfindet. Die Lagerung der Ritzel auf den Achsen des Ritzelträgers kann entweder durch Gleitlager oder bevorzugt durch Wälzlager erfolgen. Die technischen Umsetzungsmöglichkeiten des Freilaufs, der axialen Schaltkupplung und der nachgeschalteten Verdopplungsstufe sind dem Fachmann weitgehend bekannt und werden hier lediglich schematisch dargestellt.

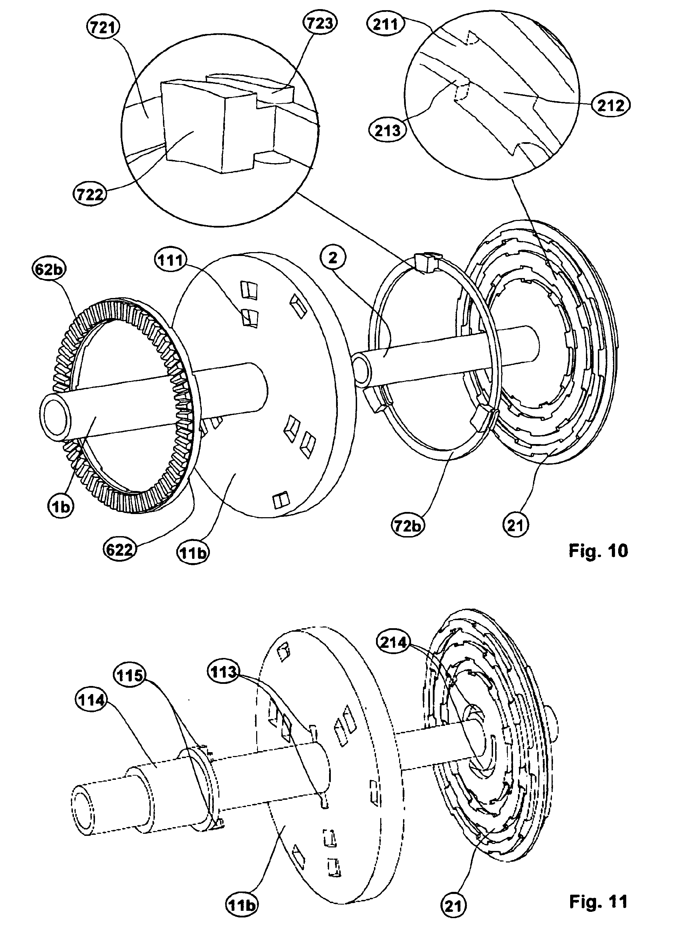

Die an der Schaltvariante 1 beteiligten Schaltelemente sind in Figur 10 für das Kronenradgetriebe b in einer Explosionsansicht dargestellt. Innerhalb der Hohlachse 1b befindet sich die Schalthülse 2, welche mit der Schaltscheibe 21 starr verbunden ist. In der Schaltscheibe 21 sind konzentrische T- oder L- förmige Nuten 211 eingearbeitet, deren Anzahl der Anzahl der zu sperrenden Kronenräder entspricht. Im Folgenden werden Aufbau und Funktionsweise der Schaltung am Beispiel des zu sperrenden Kronenrades 62b erläutert, wobei für die Schaltung der weiteren Kronenräder entsprechende Schaltelemente vorgesehen sind.

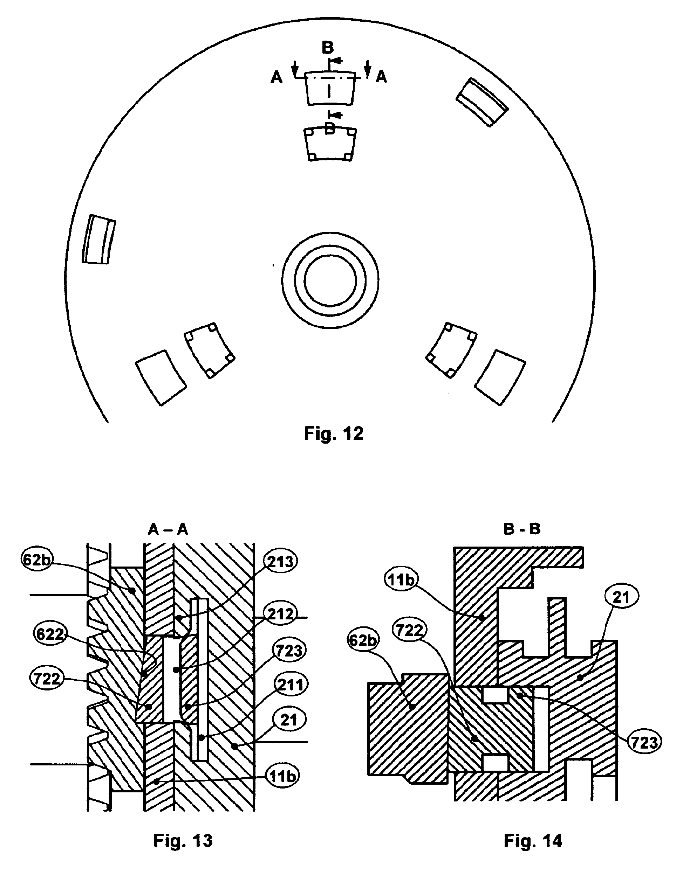

Zur Schaltung des Kronenrads 62b ist in einer zum Kronenrad 62b gehörenden Nut 211 der Schaltscheibe 21 ein zur Getriebeachse 1 konzentrischer Klinkenring 72b angeordnet, der bei der gezeigten Ausführung aus einem Ring 721 mit als Sperrklinken 722 bezeichneten Schaltelementen besteht. Die Schaltelemente werden als Sperrklinken 722 bezeichnet, auch wenn sie nicht der klassischen Vorstellung eines um einen Zapfen drehbar gelagerten Hebels entsprechen. Die Sperrklinken 722 sind zur Bereitstellung einer Freilauffunktion zum Kronenrad 62b hin abgeschrägt und sind im Bereich des Rings 721 zurückgenommen, so dass sich an der Innenseite eine Schaltzunge 723 ergibt. Im ungeschalteten Zustand gleitet die Schaltzunge 723 in der Nut 211. Die Wände 213 der Nut 211 sind an definierten Stellen mit Ausbrüchen 212 versehen. Durch Drehung der Schaltscheibe 21 gelangt die Schaltzunge 723 zu diesen Ausbrüchen 212 und wird von der Nut 211 freigegeben. Unter der Kraft einer hier nicht dargestellten Feder wird der gesamte Klinkenring 72b axial in Richtung des Kronenrades 62b gedrückt. Die Sperrklinke 722 ist zu jeder Zeit in einem Durchlass 111 der Achsscheibe 11b axial geführt. Im ungeschalteten Zustand sind die Sperrklinken 722 komplett in dem Durchlass 111 eingefahren. Im geschalteten Zustand ragen die Sperrklinken 722 in Richtung Kronenrad 62b aus den Durchlässen 111 heraus und greifen in mehrere in Umfangsrichtung verteilte Sägezahnaussparungen 622 an der inneren Stirnseite des Kronenrades 62b ein. Dadurch erfolgt die Blockierung des Kronenrades 62b in einer Richtung. Dieser Zustand ist in den Detailschnitten aus Figuren 13 und 14 dargestellt.

Durch die Sägezahnaussparungen 622 des Kronenrades 62b und die entsprechende Anschrägung der Sperrklinke 722 erfolgt in der anderen Drehrichtung ein Freilauf, da die Sperrklinke 722 im Durchlass 111 der Achsscheibe 11b versenkt wird. Sowohl die Schaltzunge 723 des Klinkenrings 72b als auch die Nutwände an den Ausbrüchen 212 sind verrundet oder mit einer Fase versehen. Damit wird erreicht dass beim Weiterdrehen der Schaltscheibe 21 die Schaltzunge 723 von den Nutwand-Enden axial in Richtung Nut 211 bewegt wird, bis sich die Schaltzunge 723 komplett in der Nut 211 befindet. Somit versinkt auch die Sperrklinke 722 im Durchlass 111 der Achsscheibe und das Kronenrad 62b wird freigegeben.

Die Verwendung des Rings 721 ist nicht zwingend notwendig. Er garantiert lediglich eine gleichförmigere Lastverteilung im Falle der Verwendung von mehreren Sperrklinken 722. Die Anzahl der zu verwendeten Sperrklinken 722 ist begrenzt durch die Anzahl der zu schaltenden Gänge und der zur Verfügung stehenden Umfangslänge. Im Falle eines 18-Gang-Getriebes auf Basis eines 9-Gang-Getriebes ist z.B. darauf zu achten, dass bei der Verwendung von drei Sperrklinken pro Kronenrad neun Schaltvorgänge innerhalb von 120° realisiert werden können.

Die tangentiale Anordnung der Ausbrüche 212 wird von der Schaltreihenfolge, der Position des Achsscheiben-Durchlasses 111, und der Anzahl der Sperrklinken 722 bestimmt. Die Anordnung und Gestaltung der Schaltelemente aus Fig. 10 ist in der praktischen Umsetzung so anzupassen, dass ein Leerlauf ausgeschlossen werden kann. Die Vorgehensweise ist dem Fachmann bekannt und wird nicht näher erläutet.

In Figur 11 ist die Möglichkeit dargestellt, durch Einbringung von Nuten 214 in die Schaltscheibe 21 einen Kupplungsring 114 in axialer Richtung definiert zu bewegen. Hierbei greifen entsprechend geformte Schaltstifte 115 des Kupplungsrings 114 geführt durch die Durchlässe 113 der Achsscheibe 11b in die Nuten 214 der Schaltscheibe 21 ein.

Figur 15 stellt eine vereinfachte Ausführung eines 14-Gang Getriebes im Längsschnitt dar. Das Getriebe enthält die Schaltvariante 2. Die Nummerierung der Bauteile entspricht weitgehend jener aus Figur 5 und Figur 6. Der Freilauf des Kronenrades 13 und die axiale Schaltkupplung 15 sind hier ebenfalls nur schematisch dargestellt.

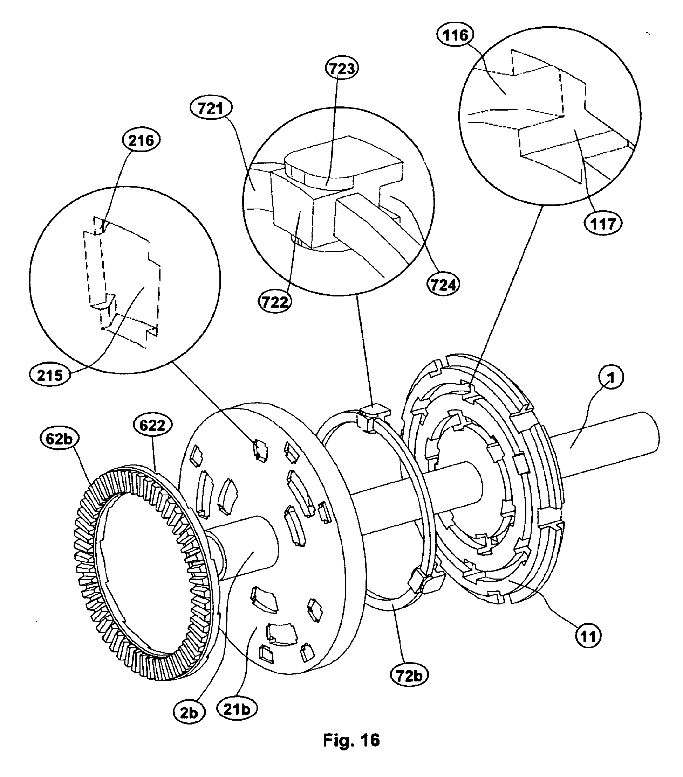

Die Funktionsweise der Schaltvariante 2 wird anhand der Figur 16 am Beispiel des zu sperrenden Kronenrades 62 des Kronenradgetriebes b erläutert. In dieser Variante umschließt die Schalthülse 2b die Getriebeachse 1. Die Achsscheibe 11 und Getriebeachse 1 sind fest miteinander verbunden und vorzugsweise aus einem Stück gefertigt. In der Achsscheibe 11 sind konzentrische Nuten 116 eingearbeitet, deren Anzahl der Anzahl der zu sperrenden Kronenräder entspricht. Die Nut 116 ist an definierten Stellen mit Aussparungen 117 versehen. In der Nut 116 ist ein Klinkenring 72b angeordnet, der auch bei dieser Ausführung aus einem Ring 721 mit Sperrklinken 722 als Schaltelementen besteht. Auch hier sind die Sperrklinken 722 an der zum Kronenrad 62b weisenden Seite abgeschrägt und greifen im geschalteten Zustand in mehrere im Unfangsrichtung verteilte Sägezahnaussparungen 622 an der inneren Stirnseite des Kronenrads 62b ein. Auf der anderen Seite der Sperrklinke 722 ist aus Gründen der Platzersparnis eine Nut 724 vorgesehen, in der sich der Klinkenring des anderen Kronenradgetriebes im nicht geschalteten Zustand befindet. Der obere und untere Teil der Klinke 722 ist zum Kronenrad 62b hin etwas zurückgenommen und bildet eine in Figur 16 erkennbare Schaltzunge 723, die eine Rundung oder alternativ eine Fase aufweist.

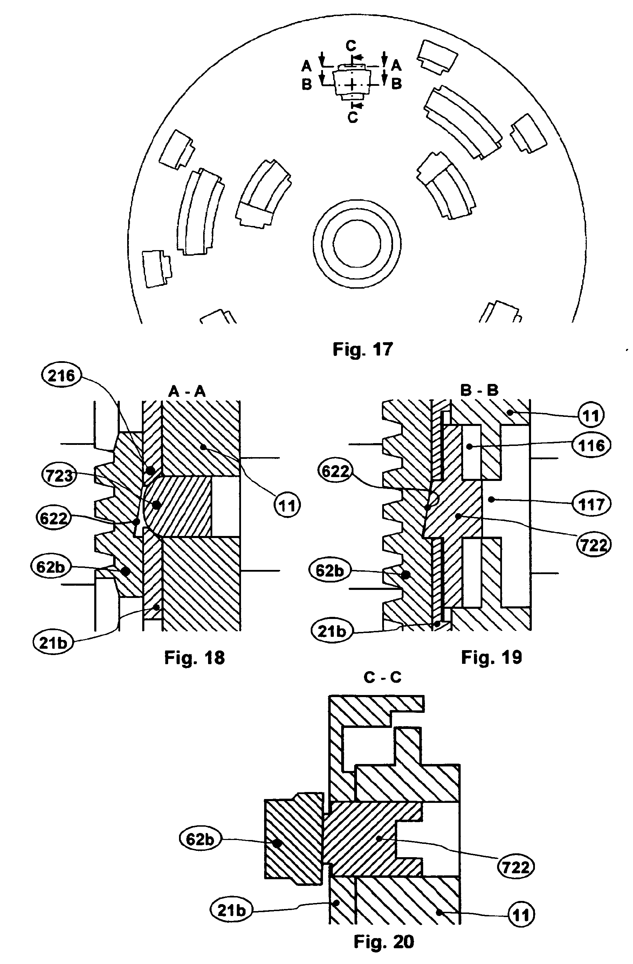

Die Schaltscheibe 21b enthält an definierten Stellen Durchlässe 215 mit Ecken 216. Die Ecken 216 werden entweder wie in Fig. 16 mit einer Fase oder alternativ mit einem Radius versehen. Durch Drehung der Schaltscheibe 21b gelangen die Sperrklinken 722 an die Durchlässe 215. Dadurch wandert der gesamte Klinkenring 72b unter der Kraft einer hier nicht dargestellten Feder axial in Richtung Kronenrad 62b. Die Sperrklinke 722 ist zu jeder Zeit in der entsprechenden Aussparung 117 der Achsscheibe 11 axial geführt. Im ungeschalteten Zustand ist die Sperrklinke 722 so in die Aussparung 117 eingefahren, dass die Schaltscheibe 21b an der Sperrklinke 722 vorbei gleiten kann. Im geschalteten Zustand ragt die Sperrklinke 722 durch die Durchlässe 215 der Schaltscheibe 21b in Richtung Kronenrad 62b über die Schaltscheibe 21b hinaus und klinkt sich in die in Umfangsrichtung angeordneten Sägezahnaussparungen 622 des Kronenrades 62b ein. Dadurch erfolgt die Blockierung des Kronenrades 62b in einer Richtung. Dieser Zustand ist in den Detailschnitten aus Fig. 18 bis Fig. 20 dargestellt. Durch die Sägezahnaussparungen 622 des Kronenrades 62b und der entsprechenden Anschrägung der Sperrklinke 722 erfolgt in der anderen Drehrichtung ein Freilauf, da die Sperrklinke 722 in der Aussparung 117 der Achsscheibe 11 versinken kann. Die Rundungen oder Fasen der Ecken 216 des Schaltscheibendurchlasses 215 und die Fasen oder Rundungen der Schaltzunge 723 der Sperrklinken 722 bewirken, dass beim Weiterdrehen der Schaltscheibe 21b die Sperrklinken 722 in Richtung Achsscheibe 11 axial bewegt werden, bis sich die Sperrklinken 722 komplett hinter der Schaltscheibe 21b befinden. Dadurch wird das Kronenrad 62b freigegeben.

Die Verwendung des Rings 721 ist nicht zwingend notwendig. Er garantiert lediglich eine gleichförmige Lastverteilung im Falle der Verwendung von mehreren Sperrklinken 722. Die Anzahl der zu verwendeten Sperrklinken 722 ist begrenzt durch die Anzahl der zu schaltenden Gänge und der zur Verfügung stehenden Umfangslänge. Im Falle eines 18-Gang-Getriebes auf Basis eines 9-Gang-Getriebes ist z.B. darauf zu achten, dass bei der Verwendung von 3 Sperrklinken pro Kronenrad, 9 Schaltvorgänge innerhalb von 120° realisiert werden können.

Die tangentiale Anordnung der Schaltscheibendurchbrüche 215 werden von der Schaltreihenfolge, der Position der Achsscheiben-Aussparungen 117, und der Anzahl der Sperrklinken 722 bestimmt. Die Anordnung und Gestaltung der Schaltelemente aus Figur 16 ist in der praktischen Umsetzung so anzupassen, dass ein Leerlauf ausgeschlossen werden kann. Die Vorgehensweise ist dem Fachmann bekannt und wird nicht näher erläutet.

Auch für die Schaltvariante 2 ist eine axiale Schaltmöglichkeit ähnlich derer für die Schaltvariante 1 vorstellbar.

Anstelle der bisher beschriebenen Sperrklinkenringe können nach wie vor Sperrklinken, in der klassischen Vorstellung eines um einen Zapfen drehbar gelagerten Hebels, verwendet werden. In diesem Fall befindet sich die Drehachse des Zapfens in einer Ebene, die senkrecht zur Getriebeachse ist.

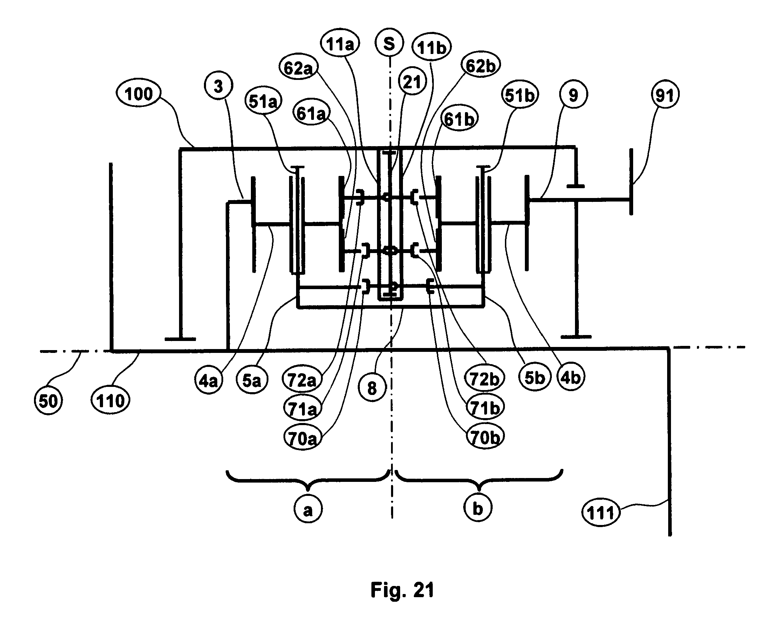

In Fig. 21 ist die schematische Darstellung eines 7-Gang Tretlagergetriebes mit teildirekten Gängen dargestellt. Obwohl die Scheiben 11a und 11b im Falle des Tretlagergetriebes nicht wie bisher mit der Getriebeachse verbunden sind, sondern mit dem Tretlagergehäuse, werden sie der gleichen Funktion wegen weiterhin Achsscheiben genannt.

Das Antriebsmoment wird über die Kurbelarme 111, der Tretlagerachse 110 und über das drehfest mit der Tretlagerachse verbundene Kronenrad 3 in das Getriebe eingeleitet. Zur Bereitstellung unterschiedlicher Übersetzungsverhältnisse verbinden die Schaltkupplungen 71a, 72b, bzw. 71b und 72b die entsprechenden Kronenräder 61a, 62a bzw. 61b, 62b drehfest mit den Achsscheiben 11a bzw. 11b. Die Achsscheiben 11a und 11b sind sowohl untereinander als auch mit dem Tretlagergehäuse 100 drehfest verbunden. Die teildirekten Gänge werden durch die Schaltkupplungen 70a und 70b realisiert. Diese verbinden die Kronenräder 61a bzw. 61b mit den Ritzelträgern 5a bzw. 5b. Damit werden die Kronenradgetriebe a und/oder b in ihrer Übersetzungsfunktion übergangen und das Moment wird direkt vom Antriebskronenrad 3 an die Kupplungshülse 8 und/oder von der Kupplungshülse 8 an das Abtriebskronenrad 9 weitergegeben. Das Kronenrad 9 ist drehfest mit dem Kettenblatt 91 verbunden.

Um eine unterbrechungsfreie Momentübertragung zu realisieren, ist es notwendig die beteiligten Schaltkupplungen 71a, 72a, 71b, 72b sowie 70b mit einer Freilauffunktion zu versehen, und darauf zu achten dass es während des Schaltvorgangs zu einer Überschneidung der aktiven Schaltkupplungen für jedes der Getriebe a und b kommt.

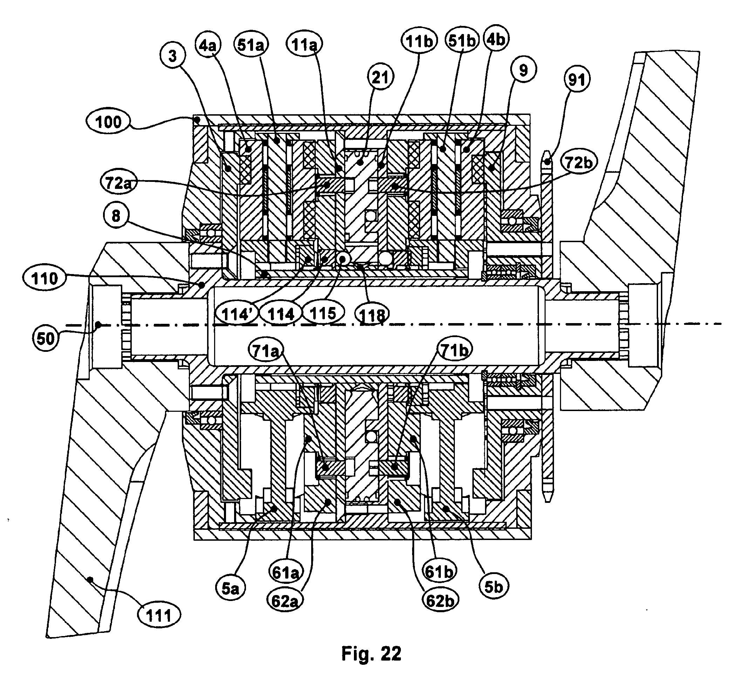

Fig. 22 stellt eine vereinfachte mögliche Ausführung des Tretlagergetriebes dar. Die Nummerierung der Bauteile entspricht weitgehend jener aus Figur 21. In dieser Ausführung werden für die Schaltkupplungen 71a, 72b, bzw. 72b und 73b aushebbare klassische Sperrklinkenfreiläufe verwendet. Die Schaltkupplungen 70a und 70b werden jeweils durch axial verschiebbare Kugeln 115 und einem axial wirkenden Zahnscheiben-Freilauf 114, 114' umgesetzt. Beide Sperrklinkenfreiläufe 71a und 72b des Kronengetriebes a befinden sich zwischen den zu schaltenden Kronenräder 61a und 62a. Entsprechendes gilt für das Kronenradgetriebe b.

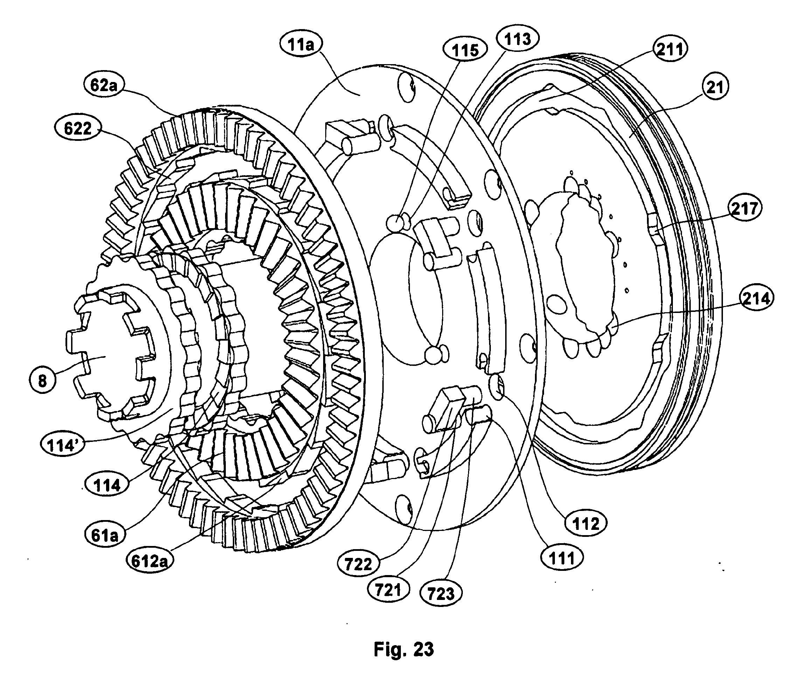

Die an der Schaltung beteiligten Elemente sind für das Kronenradgetriebe a in der Explosionsansicht aus Figur 23 dargestellt. Die Funktionsweise des Sperrklinkenfreilaufs wird anhand des zu schaltenden Kronenrads 62a erklärt. Für das Kronenrad 61a, 61b, und 62b erfolgt die Schaltung analog.

Die Sperrklinke 722 ist mittels eines Zapfens 721 im zylindrischen Durchbruch 111 der Achsscheibe 11 a drehbar gelagert. Der Hebel 723 der Sperrklinke 722 ragt durch den Durchbruch 112 der Achsscheibe 11a in die zur Tretlageachse konzentrischen Nut 211 der Schaltscheibe 21 hinein. Die Nut 211 weist in definierten Abständen die Ausbuchtungen 217 auf Durch Drehen der Schaltscheibe 21 um die Tretlagerachse 110 gelangt der Sperrklinkenhebel 723 im Bereich der Ausbuchtung 217. Somit kann eine hier nicht dargestellte Feder die Klinke 721 in die Sägezahnaussparung 622 des Kronenrades 62a drücken. Damit wird das Kronenrad 62a in einer Richtung drehfest mit der Achsscheibe 11a verbunden. Bedingt durch die Funktionsweise des Sperrklinkenfreilaufs ist das Kronerad 62a in der anderen Drehrichtung frei.

Für die teildirekten Gänge wird das Kronenrad 61a mit dem Ritzelträger 5a drehfest verbunden. In den nicht teildirekten Gängen ruhen die Kugeln 115 in den muldenförmigen Vertiefungen 214 der Schaltscheibe 21 und in der Bohrung 113 der Achsscheibe 113. Dabei sind die Zahnscheiben 114 und 114' mittels eines hier nicht dargestellten Federsystems voneinander getrennt. Durch Drehen der Schaltscheibe 21 wird beim Bereitstellen eines teildirekten Ganges die Kugel 115 aus den Vertiefungen 214 durch die axiale Führung der Bohrung 113 in Richtung der Zahnscheibe 114 bewegt. Die Zahnscheibe 114 wird somit gegen der Kraft eines Federsystems in Richtung der Zahnscheibe 114' geschoben, bis die Zähne beider Zahnscheiben ineinander greifen. Durch eine entsprechende Profilierung ist die Zahnscheibe 114 permanent mit dem Kronenrad 61 a drehfest verbunden. Lediglich die axiale Verschiebung zueinander ist möglich. Analog ist die Zahnscheibe 114' durch eine entsprechende Profilierung mit dem Ritzelträger 5a drehfest verbunden.

Anstelle des beschriebenen Zahnscheibenfreilaufs kann natürlich auch ein aushebbarer Sperrklinkenfreilauf verwendet werden. Dieser muss das freilaufende Kronerad 62a mit der Verbindungshülse 8 drehfest verbinden.

Zur Schaltindexierung dienen die über dem Umfang verteilten Vertiefungen 118 der Achsscheibe 11 a. In diesen Vertiefungen 118 ruht in den definierten Schaltstellungen eine hier nicht dargestellte Kugel unter der Kraft einer Feder.

Wird auf den Einsatz der Kronenräder 62a und 62b und den dazugehörigen Schaltkupplungen 72a und 72b verzichtet, und für die restlichen Kronenräder die selbe Zähnezahl festgelegt, erhält man ein kompaktes 3-Gang Getriebe mit den Übersetzungen 0.5, 1 und 2. Umgekehrt, werden 3 schaltbare Kronenräder (61 a, 62a, 63a bzw. 61b, 62b, 63b) pro Kronengetriebe verwendet, wären im Falle symmetrischer Zähnezahlen, unter Einbeziehung der teildirekten Gänge, 4x4-3=13 Gänge möglich. Leider ist die Generierung einer sinnvollen Gangabstufung innerhalb des üblichen Bauraums nur durch Überspringen von Gängen möglich. Somit ergibt sich z.B. laut Tabelle 8 ein weitgehend geometrisch abgestuftes 11-Gang Getriebe.

Bei den vorstehend beschriebenen Getrieben handelt es sich um Koppelgetriebe, bei denen die Kronenradgetriebe entweder über einen gemeinsamen Ritzelträger (Fig. 3 bis Fig. 6, Fig. 21) oder über verbundene Kronenräder (Fig. 7) gekoppelt waren.

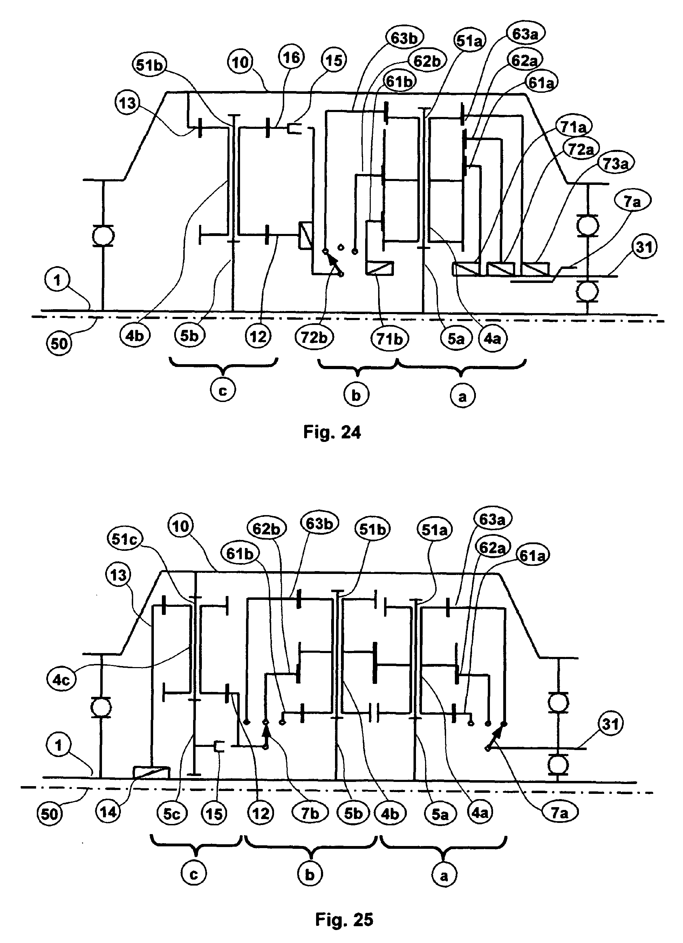

Fig. 24 zeigt ein Getriebe bei dem die Bereitstellung von 9 Gängen von einem einzigen Minusgetriebe a übernommen wird. Dabei werden die antriebsseitigen Kronenräder 61a, 62a und 63a je nach Gang mit einem Antreiber 31 verbunden. Die bisherigen Ritzelträger 5a und 5b verschmelzen zu einem gemeinsamen Ritzelträger 5a. Im Unterschied zu den vorgestellten Koppelgetrieben, bei denen die an der Übersetzung beteiligten Kronenräder, durch die Verbindung zur Nabenachse blockiert wurden, sind im Falle des Getriebes aus Fig. 24 die beteiligten Kronenräder in Bewegung, was eine Schaltung von drei konzentrisch angeordneten Kronenrädern kompliziert. Um eine einfache Schaltung zu ermöglichen, kann die Gegebenheit ausgenutzt werden, dass das Kronenrad mit der kleinsten Zähnezahl die größte Drehzahl aufweist. Dazu werden die Kronenräder 61 a, 62a und 63a über die Freilaufkupplungen 71 a, 72a und 73a permanent mit dem Antreiber 31 verbunden. Um die unterschiedlichen Übersetzungen bereitzustellen, wird nun entweder der Freilauf 73a oder die Freiläufe 73a und 72a gleichzeitig von der Schaltvorrichtung 7a ausgehoben. Der Freilauf 71a arbeitet als automatische Kupplung und muss nicht geschaltet werden.

Auch eine Kombination von Schaltkupplung und automatischen Freilauf wie sie in Fig. 24 zur Schaltung der Abtriebskronenräder dargestellt wird, ist denkbar. Dabei erfolgt die Schaltung der Kronenräder 62b und 63b über die Schaltkupplung 7b während die Freilaufkupplung 71b als automatische Kupplung arbeitet. Die Schaltkupplung 7b kann z.B. über einen axial verschiebbaren Kupplungsring erfolgen. Die Funktionsweise dieser Schaltvorrichtung sowie die Schaltvorrichtungen zum Ausheben der Freiläufe sind im Fahrrad-Getriebebau bekannt und werden nicht näher beschrieben. Die Abtriebsseite des Kronenradgetriebes aus Fig. 24 ist mit den Kronenrädern 61b, 62b und 63b zur Antriebsseite symmetrisch aufgebaut. Da im Minus-Getriebe a eine Umkehr der Drehrichtung in Bezug auf den Antreiber 31 erfolgt, ist es notwendig, ein weiteres Minus-Getriebe c nachzuschalten, das durch eine erneute Umkehrung der Drehrichtung den Dreh-Gleichsinn des Antreibers 31 und der Nabenhülse 10 gewährleistet, es sei denn es erfolgt eine Drehrichtungsumkehr bereits im vorhergehenden Antriebsstrang. Der Abtrieb erfolgt über das Kronenrad 12, das gleichzeitig Antrieb des Getriebes c ist. Das Abtriebskronenrad 13 des Getriebes c ist entweder direkt, oder über eine Freilaufkupplung mit der Nabenhülse 10 verbunden. Über das Verhältnis der Zähneanzahlen der Kronenräder 12 und 13 kann die Gesamtübersetzung bei Bedarf angepasst werden. Durch eine zusätzliche Schaltvorrichtung 15 und ein zusätzliches Kronerad 16 können theoretisch weitere Gänge realisiert werden. Da der Bauraumdurchmesser begrenzt ist, kommt es dabei in der Regel zu einer Überschneidung der Gänge, da im Unterschied zum Abtrieb über den Ritzelträger wie in Fig. 3 keine so großen Übersetzungen erreicht werden.

Erfolgt eine Drehrichtungsumkehr bereits im Antriebsstrang vor dem Getriebe, so ist es durchaus möglich ein Kronenradgetriebe c wie in Fig. 4 nachzuschalten.

Der Nachteil der Drehrichtungsumkehr bei Verwendung von Minus-Getrieben wie in Fig. 24, kann mit einer Getriebe-Anordnung gemäß Fig. 25 beseitigt werden. In diesem Fall treiben die Ritzel 4a der Ritzelträger 5a die Ritzel 4b des Ritzelträgers 5b an. Damit ist die Drehrichtung des Kronenrades 12 gleich der Drehrichtung des Antreibers 31. Dabei können die Abstufungen der Ritzel 4a und 4b unterschiedlich sein.

Für eine Verdopplung der Gänge kann ein weiteres Kronenradgetriebe c nachgeschaltet werden, das dem Kronenradgetriebe c aus Fig. 4 in Form und Funktion entspricht. Selbstverständlich kann auch in den Getrieben aus Figur 24 und Figur 25 anstelle der Kronenradgetriebe c ein Planetengetriebe verwendet werden.

Weiterhin werden aus der Vielzahl der möglichen Zähnezahlkombinationen ein paar herausgegriffen und tabellarisch dargestellt. Die Tabellen enthalten in erster Linie die Getriebecharakteristiken ohne dem nachgeschalteten Kronen- bzw. Planetengetriebe zur Erhöhung der Ganganzahl. Dieses wird für bestimmte Konfigurationen am Ende der Tabelle gesondert aufgeführt. Die exemplarisch dargestellten Zähnezahlkombinationen entsprechen weitgehend der üblichen geometrischen Abstufung. Die Entfaltung ergibt sich aus dem Zusammenspiel Ritzel-Zähnezahl, Kettenblatt-Zähnezahl, Getriebe und Radumfang. Für eine zweckgemäße Entfaltung, können bei unsymmetrischen Zähnezahlen, die Zähnezahlen der Kronenradgetriebe a, b vertauscht werden.

**Tab.1**

| Typ | 18G, 4 Ritzel/Ritzelträger, nicht symmetrische Zähnezahlen Getriebeanordnung nach Fig. 3 | | | | | | | | | |
|---|---|---|---|---|---|---|---|---|---|---|
| Kronenrad | 3 | 61a | 62a | 63a | 61b | 62b | 63b | 9 | | |
| Zähne Kronenrad | 32 | 32 | 52 | 80 | 44 | 64 | 80 | 64 | | |
| Zähne Ritzel | 17 | 17 | 15 | 14 | 15 | 17 | 17 | 17 | | |

| | | | | | | | | | Übers. verh. | Stufensprung |
|---|---|---|---|---|---|---|---|---|---|---|
| Gang 1 | | O | | | | | O | | 1,125 | |
| Gang 2 | | O | | | | O | | | 1,000 | 12,5 [%] |
| Gang 3 | | O | | | O | | | | 0,890 | 12,4 [%] |
| Gang 4 | | | O | | | | O | | 0,792 | 12,4 [%] |
| Gang 5 | | | O | | | O | | | 0,704 | 12,5 [%] |
| Gang 6 | | | O | | O | | | | 0,626 | 12,4 [%] |
| Gang 7 | | | | O | | | O | | 0,558 | 12,3 [%] |
| Gang 8 | | | | O | | O | | | 0,496 | 12,5 [%] |
| Gang 9 | | | | O | O | | | | 0,441 | 12,4 [%] |
| Gesamtübers. 9G | | | | | | | | | 2.551 | |

| Kronenradgetriebe c | 5 Ritzel/Ritzelträger | | | | | | | | | G9/G10 |
|---|---|---|---|---|---|---|---|---|---|---|
| Kronenrad | 12 | 15 | | | | | | | 2,875 | 12,7 [%] |
| Zähne Kronenrad | 40 | 75 | | | | | | | | |
| Zähne Ritzel | = | = | | | | | | | | |
| Gesamtübers. 18G | | | | | | | | | 7,334 | |

**Tab. 2**

| Typ | 18G, 5 Ritzel/Ritzelträger, nicht symmetrische Zähnezahlen Getriebeanordnung nach Fig. 4 | | | | | | | | | |
|---|---|---|---|---|---|---|---|---|---|---|
| Kronenrad | **3** | **61a** | **62a** | **63a** | **61b** | **62b** | **63b 9** | | | |
| Zähne Kronenrad | 35 | 35 | 55 | 80 | 45 | 65 | 80 | 45 | | |
| Zähne Ritzel | 18 | 18 | 15 | 13 | 14 | 16 | 16 | 14 | | |

| | | | | | | | | | Übers. verh. | Stufensprung |
|---|---|---|---|---|---|---|---|---|---|---|
| Gang 1 | | O | | | | | O | | 1,278 | |
| Gang 2 | | O | | | | O | | | 1,132 | 12,9 [%] |
| Gang 3 | | O | | | O | | | | 1,000 | 13,2 [%] |
| Gang 4 | | | O | | | | O | | 0,886 | 12,9 [%] |
| Gang 5 | | | O | | | O | | | 0,785 | 12,9 [%] |
| Gang 6 | | | O | | O | | | | 0,693 | 13,2 [%] |
| Gang 7 | | | | O | | | O | | 0,614 | 13,0 [%] |
| Gang 8 | | | | O | | O | | | 0,544 | 12,9 [%] |
| Gang 9 | | | | O | O | | | | 0,480 | 13,2 [%] |
| Gesamtübers. 9G | | | | | | | | | 2.660 | |

| Kronenradgetriebe c | 5 Ritzel/Ritzeiträger | | | | | | | | | G9/G10 |
|---|---|---|---|---|---|---|---|---|---|---|
| Kronenrad | **12** | **15** | | | | | | | 3,000 | 12,8 [%] |
| Zähne Kronenrad | 40 | 80 | | | | | | | | |
| Zähne Ritzel | = | = | | | | | | | | |
| Gesamtübers. 18G | | | | | | | | | 7,98 | |

**Tab. 3**

| Typ | 9G, 5 Ritzel/Ritzelträger, nicht symmetrische Zähnezahlen Getriebeanordnung nach Fig. 3 | | | | | | | | | |
|---|---|---|---|---|---|---|---|---|---|---|
| Kronenrad | **3** | **61a** | **62a** | **63a** | **61b** | **62b** | **63b** | **9** | | |
| Zähne Kronenrad | 35 | 35 | 75 | 110 | 70 | 90 | 110 | 70 | | |
| Zähne Ritzel | 18 | 18 | 17 | 13 | 17 | 16 | 15 | 17 | | |

| | | | | | | | | | Übers. verh. | Stufensprung |
|---|---|---|---|---|---|---|---|---|---|---|
| Gang 1 | | O | | | | | O | | 1,390 | |
| Gang 2 | | O | | | | O | | | 1,183 | 17,5 [%] |
| Gang 3 | | O | | | O | | | | 1 | 18,3 [%] |
| Gang 4 | | | O | | | | O | | 0,851 | 17,5 [%] |
| Gang 5 | | | O | | | O | | | 0,724 | 17,5 [%] |
| Gang 6 | | | O | | O | | | | 0,612 | 18,3 [%] |
| Gang 7 | | | | O | | | O | | 0,520 | 17,7 [%] |
| Gang 8 | | | | O | | O | | | 0,442 | 17,5 [%] |
| Gang 9 | | | | O | O | | | | 0,374 | 18,3 [%] |
| Gesamtübers. 9G | | | | | | | | | 3.720 | |

**Tab. 4**

| Typ | 14G, 5 Ritzel/Ritzelträger, symmetrische Zähnezahlen Getriebeanordnung nach Fig. 5 | | | | | | | | | |
|---|---|---|---|---|---|---|---|---|---|---|
| Kronenrad | **3** | **61a** | **62a** | **63a** | **61b** | **62b** | **63b** | **9** | | |
| Zähne Kronenrad | 50 | 35 | 60 | 75 | 35 | 60 | 75 | 50 | | |
| Zähne Ritzel | 14 | 14 | 14 | 14 | 14 | 14 | 14 | 14 | | |

| | | | | | | | | | Übers. verh. | Stufensprung |
|---|---|---|---|---|---|---|---|---|---|---|
| Gang 1 | | O | | | | | O | | 1,471 | |
| Gang 2 | | O | | | | O | | | 1,294 | 13,6 [%] |
| Gang 3 | | | O | | | | O | | 1,136 | 13,9 [%] |
| Gang 4 | | | O | | | O | | | 1 | 13,6 [%] |
| Gang 5 | | | | O | | O | | | 0,880 | 13,6 [%] |
| Gang 6 | | | O | | O | | | | 0,773 | 13,9 [%] |
| Gang 7 | | | | O | O | | | | 0,680 | 13,6 [%] |
| Gesamtübers. 7G | | | | | | | | | 2,1626 | |

| Kronenradgetriebe c | 5 Ritzel/Ritzelträger | | | | | | | | | G7/G8 |
|---|---|---|---|---|---|---|---|---|---|---|
| Kronenrad | **12** | **15** | | | | | | | 2,461 | 13,8 [%] |
| Zähne Kronenrad | 55 | 75 | | | | | | | | |
| Zähne Ritzel | 15 | 14 | | | | | | | | |
| Gesamtübers. 14G | | | | | | | | | 5.322 | |

Durch einfaches Ersetzen des An- und Abtrieb-Kronenrades aus **Tab. 4** erhält man Getriebe mit einem weitgehend konstanten Stufensprung gemäß **Tab. 5**

**Tab. 5**

| Zähne Kronenrad 3; 9 | Gesamtübersetzung | Stufensprung |
|---|---|---|
| 60 | 2,019 | Min=12,3 [%]; Max=12,5 [%] |
| 55 | 2,086 | Min = Max=13,0 [%] |
| 45 | 2,250 | Min=14,3 [%]; Max=14,8 [%] |
| 40 | 2,351 | Min=15,0 [%]; Max=15,9 [%] |
| 35 | 2,469 | Min=15,8 [%]; Max=17,2 [%] |

**Tab. 6**

| Typ | 7G, 5 Ritzel/Ritzelträger, symmetrisch, teildirekte Gänge Getriebeanordnung nach Fig. 5, ohne Kronenradgetriebe c | | | | | | | |
|---|---|---|---|---|---|---|---|---|
| Kronenrad | **3** | **61a** | **62a** | **61b** | **62b** | **9** | | |
| Zähne Kronenrad | 85 | 35 | 50 | 35 | 50 | 85 | | |
| Zähne Ritzel | 13 | 18 | 16 | 18 | 16 | 13 | | |

| | | | | | | | Übers. verh. | Stufensprung |
|---|---|---|---|---|---|---|---|---|
| Gang 1 | | direkt | | | O | | 1,478 | |
| Gang 2 | | direkt | | O | | | 1,297 | 13,9 [%] |
| Gang 3 | | O | | | O | | 1,139 | 13,9 [%] |
| Gang 4 | | direkt | | direkt | | | 1 | 13,9 [%] |
| Gang 5 | | | O | O | | | 0,878 | 13,9 [%] |
| Gang 6 | | O | | direkt | | | 0,771 | 13,9 [%] |
| Gang 7 | | | O | direkt | | | 0,677 | 13,9 [%] |
| Gesamtübers. 7G | | | | | | | 2.183 | |

**Tab. 7**

| Typ | 7G, 5 Ritzel/Ritzelträger, symmetrisch, teildirekte Gänge Getriebeanordnung nach Fig. 21 | | | | | | | |
|---|---|---|---|---|---|---|---|---|
| Kronenrad | **3** | **61a** | **62a** | **61b** | **62b** | **9** | | |
| Zähne Kronenrad | 65 | 40 | 70 | 40 | 70 | 65 | | |
| Zähne Ritzel | = | = | = | = | = | = | | |

| | | | | | | | Übers. verh. | Stufensprung |
|---|---|---|---|---|---|---|---|---|
| Gang 1 | | | O | direkt | | | 2,077 | |
| Gang 2 | | O | | direkt | | | 1,615 | 28,6 [%] |
| Gang 3 | | | O | O | | | 1,286 | 25,6 [%] |
| Gang 4 | | direkt | | direkt | | | 1 | 28,6 [%] |
| Gang 5 | | O | | | O | | 0,778 | 28,6 [%] |
| Gang 6 | | direkt | | O | | | 0,619 | 25,6 [%] |
| Gang 7 | | direkt | | | O | | 0,481 | 28,6 [%] |
| Gesamtübers. 7G | | | | | | | 4,314 | |

**Tab. 8**

| Typ | 11G, 5 Ritzel/Ritzelträger, symmetrisch, teildirekte Gänge Getriebeanordnung nach Fig. 21 | | | | | | | | | |
|---|---|---|---|---|---|---|---|---|---|---|
| Kronenrad | **3** | **61a** | **62a** | **63a** | **61b** | **62b** | **63b** | **9** | | |
| Zähne Kronenrad | 60 | 40 | 60 | 80 | 40 | 60 | 80 | 60 | | |
| Zähne Ritzel | = | = | = | = | = | = | = | = | | |

| | | | | | | | | | Übers. verh. | Stufensprung |
|---|---|---|---|---|---|---|---|---|---|---|
| 1. Gang 1 | | | | O | direkt | | | | 2,333 | |
| 2. Gang 2 | | | O | | direkt | | | | 2,000 | 16,7 [%] |
| 3. Gang 3 | | O | | | direkt | | | | 1,667 | 20,0 [%] |
| 4. Gang 4 | | | | O | O | | | | 1,400 | 19,0 [%] |
| 5. | | | O | | O | | | | 1,200 | |
| 6. Gang 5 | | | | O | | O | | | 1,167 | 20,0[%] |
| 7. Gang 6 | | direkt | | | direkt | | | | 1 | 16,7[%] |
| 8. Gang 7 | | | O | | | | O | | 0,857 | 16,7[%] |
| 9. | | O | | | | O | | | 0,833 | |
| 10. Gang 8 | | O | | | | | O | | 0,714 | 20,0[%] |
| 11. Gang 9 | | direkt | | | O | | | | 0,600 | 19,0[%] |
| 12. Gang 10 | | direkt | | | | O | | | 0.500 | 20,0[%] |
| 13. Gang 11 | | direkt | | | | | O | | 0,429 | 16,7[%] |
| Gesamtübers. 11G | | | | | | | | | 5,445 | |

**Tab. 9**

| Typ | 13G, 5 Ritzel/Ritzelträger Getriebeanordnung nach Fig. 24 | | | | | | | |
|---|---|---|---|---|---|---|---|---|
| Kronenrad | **61a** | **62a** | **63a** | **61b** | **62b** | **63b** | | |
| Zähne Kronenrad | 65 | 75 | 80 | 40 | 60 | 85 | | |
| Zähne Ritzel | 15 | 15 | 14 | 15 | 15 | 14 | | |

| | | | | | | | Übers. verh. | Stufensprung |
|---|---|---|---|---|---|---|---|---|
| Gang 1 | O | | | | | O | 1,401 | |
| Gang 2 | | O | | | | O | 1,214 | 15,4 [%] |
| Gang 3 | | | O | | | O | 1,062 | 14,3 [%] |
| Gang 4 | O | | | | O | | 0,923 | 15,1 [%] |
| Gang 5 | | O | | | O | | 0,800 | 15,4 [%] |
| Gang 6 | | | O | | O | | 0,700 | 14,3 [%] |
| Gang 7 | O | | | O | | | 0,615 | 13,8 [%] |
| Gang 8 | | O | | O | | | 0,533 | 15,4 [%] |
| Gang 9 | | | O | O | | | 0,467 | 14,3 [%] |
| Gesamtübers. 9G | | | | | | | 3,002 | |

| Kronenradgetriebe c | | G9/G10 | | | | | | |
|---|---|---|---|---|---|---|---|---|
| Kronenrad | **15** | **12** | | | | | 1,615 | 15,3 [%] |
| Zähne Kronenrad | 70 | 40 | | | | | | |
| Zähne Ritzel | 14 | 14 | | | | | | |
| Gesamtübers. 13G | | | | | | | 5.250 | |

**Tab. 10**

| Typ | 9G, 5 Ritzel/Ritzelträger, Getriebeanordnung nach Fig. 25, ohne Kronenradgetriebe c | | | | | | | |
|---|---|---|---|---|---|---|---|---|
| Kronenrad | **61a** | **62a** | **63a** | **61b** | **62b** | **63b** | | |
| Zähne Kronenrad | 35 | 50 | 60 | 35 | 60 | 85 | | |
| Zähne Ritzel | 15 | 18 | 18 | 18 | 15 | 15 | | |

| | | | | | | | Übers. verh. | Stufensprung |
|---|---|---|---|---|---|---|---|---|
| Gang 1 | O | | | | | O | 2.429 | |
| Gang 2 | | O | | | | O | 2.040 | 19,0 [%] |
| Gang 3 | | | O | | | O | 1.700 | 20,0 [%] |
| Gang 4 | O | | | | O | | 1,429 | 19,0 [%] |
| Gang 5 | | O | | | O | | 1,200 | 19,0 [%] |
| Gang 6 | | | O | | O | | 1,000 | 20,0 [%] |
| Gang 7 | O | | | O | | | 0,833 | 20,0 [%] |
| Gang 8 | | O | | O | | | 0,700 | 19,0 [%] |
| Gang 9 | | | O | O | | | 0,583 | 20,0 [%] |
| Gesamtübers. 9G | | | | | | | 4,166 | |

## Patentansprüche

1. Mehrgang-Getriebe für Fahrräder, das zur Bereitstellung unterschiedlicher Übersetzungsverhältnisse mindestens zwei Kronenradgetriebe (a, b) mit jeweils mindestens zwei Kronenrädern (3, 9, 61a, 62a, 63a, 61b, 62b, 63b), eine Schalteinrichtung (2; 2a, 2b) zur wählbaren Verbindung der Kronenräder (3, 9, 61a, 62a, 63a, 61b, 62b, 63b) mit feststehenden und/oder rotierenden Getriebeelementen (1, 11, 11a, 11b, 10, 31) und mehrere zwischen den Kronenrädern (3, 9, 61a, 62a, 63a, 61b, 62b, 62c) angeordnete Ritzel (4a, 4b) enthält, die auf jeweils einem Ritzelträger (5a, 5b) um zur Drehachse der Kronenräder (3, 9, 61a, 62a, 63a, 61b, 62b, 63b) senkrechte Achsen (51a, 51b) drehbar gelagert und in Eingriff mit den Kronenrädern (3, 9, 61a, 62a, 63a, 61b, 62b, 63b) sind, **dadurch gekennzeichnet, dass** die beiden Kronenradgetriebe (a, b) eine gemeinsame Drehachse (50) aufweisen und jedes Ritzel (4a, 4b) der Ritzelträger (5a, 5b) im permanenten Eingriff mit mindestens zwei Kronenrädern (3, 9, 61a, 62a, 63a, 61b, 62b, 63b) steht.

2. Mehrgang-Getriebe nach Anspruch 1, **dadurch gekennzeichnet, dass** jedes Kronenradgetriebe (a, b) drei Kronenräder (61a, 62a, 63a, 61b, 62b, 63b) enthält, die im permanenten Eingriff mit den zugehörigen Ritzeln (4a, 4b) stehen.

3. Mehrgang-Getriebe nach Anspruch 1 oder 2, **dadurch gekennzeichnet, dass** jedes Kronenradgetriebe (a, b) mindestens drei um die Drehachse (50) sternföimig angeordnete Ritzel (4a, 4b) mit mehreren Ritzelstufen (41a, 42a, 43a, 41b, 42b, 43b) enthält.

4. Mehrgang-Getriebe nach einem der Ansprüche 1 bis 3, **dadurch gekennzeichnet, dass** die Ritzelträger (5a, 5b) des ersten und zweiten Kronenradgetriebes (a, b) drehfest miteinander verbunden sind.

5. Mehrgang-Getriebe nach Anspruch 4, **dadurch gekennzeichnet, dass** die Ritzelträger (5a, 5b) des ersten und zweiten Kronenradgetriebes (a, b) durch eine Verbindungshülse (8) drehfest miteinander verbunden sind.

6. Mehrgang-Getriebe nach einem der Ansprüche 1 bis 3, **dadurch gekennzeichnet, dass** ein Kronenrad (63a) des ersten Kronenradgetriebes (a) und ein Kronenrad (63b) des zweiten Kronenradgetriebes (b) durch eine Verbindungshülse (8) drehfest miteinander verbunden sind.

7. Mehrgang-Getriebe nach Anspruch 6, **dadurch gekennzeichnet, dass** die beiden drehfest miteinander verbunden Kronenräder (63a, 63b) einteilig mit der Verbindungshülse (8) ausgeführt sind.

8. Mehrgang-Getriebe nach einem der Ansprüche 1 bis 7, **dadurch gekennzeichnet, dass** dem zweiten Kronenradgetriebe (b) ein drittes Kronenradgetriebe (c) mit zwei Kronenrädern (12, 13) und mindestens einem auf einem Ritzelträger (5c) angeordneten Ritzel (4c) nachgeordnet ist.

9. Mehrgang-Getriebe nach einem der Ansprüche 1 bis 8, **dadurch gekennzeichnet, dass** mindestens ein Kronenradgetriebe (a, b) eine Schaltkupplung (15) enthält, durch die entweder die beiden Kronenräder (3, 9) des jeweiligen Kronenradgetriebes (a, b) oder der Ritzelträger (5a, 5b, 5c) mit dem dazugehörigen Kronenrad (3, 9, 61a, 61b) koppelbar ist.

10. Mehrgang-Getriebe nach Anspruch 8 oder 9, **dadurch gekennzeichnet, dass** das Kronenrad des dritten Kronenradgetriebes (c) über einen Freilauf (14) mit einer Getriebeachse (1) oder einem Tretlagergehäuse (100) verbunden ist.

11. Mehrgang-Getriebe nach einem der Ansprüche 1 bis 10, **dadurch gekennzeichnet, dass** die Schalteinrichtung (2; 2a, 2b) eine zur Drehachse (50) konzentrische Achsscheibe (11, 11a, 11b) und eine zur Drehachse (50) konzentrische Schaltscheibe (21, 21a, 21b) enthält, wobei die Achsscheibe (11, 11a, 11b) drehfest und die Schaltscheibe (21, 21a, 21b) um die Drehachse (50) drehbar gelagert ist.

12. Mehrgang-Getriebe nach Anspruch 11, **dadurch gekennzeichnet, dass** die Achsscheibe (11, 11a, 11b) und die Schaltscheibe (21, 21a, 21b) mindestens zwei konzentrisch angeordnete Nuten (211, 116) und Durchlässe (111, 112, 113, 117, 118, 212,-215, 217) oder Vertiefungen (214) zur Bewegung von Schaltstiften (115) oder Sperrklinken (722) aufweisen.

13. Mehrgang-Getriebe nach Anspruch 12, **dadurch gekennzeichnet, dass** die Sperrklinken (722) in einer mit der Schalthülse (2) fest verbundenen Schaltscheibe (21) und in Durchlässen (111) einer mit einer Getriebeachse (1) fest verbundenen Achsscheibe (11b) angeordnet sind.

14. Mehrgang-Getriebe nach Anspruch 12, **dadurch gekennzeichnet, dass** die Sperrklinken (722) in einer mit einer Getriebeachse (1) fest verbundenen Achsscheibe (11) und in Durchlässen (215) einer mit der Schalthülse (2b) fest verbundenen Schaltscheibe (21b) angeordnet sind.

15. Mehrgang-Getriebe nach einem der Ansprüche 12 bis 14, **dadurch gekennzeichnet, dass** die Sperrklinken (722) an einem Klinkenring (721) angeordnet sind.

16. Mehrgang-Getriebe nach einem der Ansprüche 12 bis 15, **dadurch gekennzeichnet, dass** die Sperrklinken (722) als Klinkenfreilauf axial in Richtung der Drehachse (50) wirken.

17. Mehrgang-Getriebe nach einem der Ansprüche 12 bis 15, **dadurch gekennzeichnet, dass** die Sperrklinken (722) als Klinkenfreilauf radial senkrecht zur Richtung der Drehachse (50) wirken.

18. Mehrgang-Getriebe nach einem der Ansprüche 1 bis 17, **dadurch gekennzeichnet, dass** es in ein Nabengehäuse (10) oder ein Tretlagergehäuse (100) integrierbar ist.

19. Mehrgang-Getriebe nach einem der Ansprüche 1 bis 18, **dadurch gekennzeichnet, dass** die Ritzel (4a) des Ritzelträgers (5a) in Eingriff mit den Ritzeln (4b) der Ritzelträgers (5b) sind.

20. Mehrgang-Getriebe für Fahrräder, das zur Bereitstellung unterschiedlicher Übersetzungsverhältnisse mindestens zwei Kronenradgetriebe (a, b) mit jeweils mindestens zwei Kronenrädern (61a, 62a, 63a, 61b, 62b, 63b), eine Schalteinrichtung (7a) zur wählbaren Verbindung der Kronenräder (61a, 62a, 63a, 61b, 62b, 63b) mit feststehenden und/oder rotierenden Getriebeelementen (1, 31) und mehrere zwischen den Kronenrädern (3, 9, 61a, 62a, 63a, 61b, 62b, 63b) angeordnete Ritzel (4a) enthält, die auf einem gemeinsamen Ritzelträger (5a, 5b) um zur Drehachse der Kronenräder (61a, 62a, 63a, 61b, 62b, 63b) senkrechte Achsen drehbar gelagert und in Eingriff mit den Kronenrädern (61a, 62a, 63a, 61b, 62b, 63b) sind, **dadurch gekennzeichnet, dass** die beiden Kronenradgetriebe (a, b) eine gemeinsame Drehachse (50) aufweisen und jedes Ritzel (4a) des Ritzelträgers (5a, 5b) im permanenten Eingriff mit mindestens zwei Kronenrädern (61a, 62a, 63a, 61b, 62b, 63b) steht.

## Claims

1. Multi-gear transmission for bicycles which for provision of different gear ratios comprises at least two crown gear trains (a, b) each with at least two crown gears (3, 9, 61a, 62a, 63a, 61b, 62b, 63b), a shift mechanism (2; 2a, 2b) for selective connection of the crown gears (3, 9, 61a, 62a, 63a, 61b, 62b, 63b) with fixed and/or rotating transmission elements (1, 11, 11a, 11b, 10, 31) and a plurality of pinions (4a, 4b) which are arranged between the crown gears (3, 9, 61a, 62a, 63a, 61b, 62b, 62c) and in each case mounted on a pinion carrier (5a, 5b) so as to be rotatable about shafts (51a, 51b) perpendicular to the axis of rotation of the crown gears (3, 9, 61a, 62a, 63a, 61b, 62b, 63b) and in mesh with the crown gears (3, 9, 61a, 62a, 63a, 61b, 62b, 63b), **characterised in that** the two crown gear trains (a, b) have a common axis of rotation (50) and each pinion (4a, 4b) of the pinion carriers (5a, 5b) is in permanent mesh with at least two crown gears (3, 9, 61a, 62a, 63a, 61b, 62b, 63b).

2. Multi-gear transmission according to claim 1, **characterised in that** each crown gear train (a, b) comprises three crown gears (61a, 62a, 63a, 61b, 62b, 63b) which are in permanent mesh with the associated pinions (4a, 4b).

3. Multi-gear transmission according to claim 1 or 2, **characterised in that** each crown gear train (a, b) comprises at least three pinions (4a, 4b) arranged in a star configuration about the axis of rotation (50) with a plurality of pinion steps (41a, 42a, 43a, 41b, 42b, 43b).

4. Multi-gear transmission according to one of claims 1 to 3, **characterised in that** the pinion carriers (5a, 5b) of the first and second crown gear trains (a, b) are connected to one another so that they cannot turn.

5. Multi-gear transmission according to claim 4, **characterised in that** the pinion carriers (5a, 5b) of the first and second crown gear trains (a, b) are connected to one another by a connecting sleeve (8) so that they cannot turn.

6. Multi-gear transmission according to one of claims 1 to 3, **characterised in that** a crown gear (63a) of the first crown gear train (a) and a crown gear (63b) of the second crown gear train (b) are connected to one another by a connecting sleeve (8) so that they cannot turn.

7. Multi-gear transmission according to claim 6, **characterised in that** the two crown gears (63a, 63b) connected to one another so that they cannot turn are formed in one piece with the connecting sleeve (8).

8. Multi-gear transmission according to one of claims 1 to 7, **characterised in that** the second crown gear train (b) is followed by a third crown gear train (c) with two crown gears (12, 13) and at least one pinion (4c) arranged on a pinion carrier (5c).

9. Multi-gear transmission according to one of claims 1 to 8, **characterised in that** at least one crown gear train (a, b) comprises a shift coupling (15) through which either the two crown gears (3, 9) of the respective crown gear train (a, b) or the pinion carrier (5a, 5b, 5c) can be coupled with the associated crown gear (3, 9, 61a, 61b).

10. Multi-gear transmission according to claim 8 or 9, **characterised in that** the crown gear of the third crown gear train (c) is connected by means of a free wheel (14) with a transmission shaft (1) or a bottom bracket housing (100).

11. Multi-gear transmission according to one of claims 1 to 10, **characterised in that** the shift mechanism (2; 2a, 2b) comprises an axial disc (11, 11a, 11b) concentric with the axis of rotation (50) and a shift disc (21, 21a, 21b) concentric with the axis of rotation (50), the axial disc (11, 11a, 11b) being mounted so that it cannot turn and the shift disc (21, 21a, 21b) being mounted so that it can turn about the axis of rotation (50).

12. Multi-gear transmission according to claim 11, **characterised in that** the axial disc (11, 11a, 11b) and the shift disc (21, 21a, 21b) have at least two concentrically arranged slots (211, 116) and openings (111, 112, 113, 117, 118, 212, 215, 217) or recesses (214) for movement of shift pins (115) or blocking pawls (722).

13. Multi-gear transmission according to claim 12, **characterised in that** the blocking pawls (722) are arranged in a shift disc (21) connected firmly to the shift sleeve (2) and in openings (111) in an axial disc (11b) connected firmly to a transmission shaft (1).

14. Multi-gear transmission according to claim 12, **characterised in that** the blocking pawls (722) are arranged in an axial disc (11) connected firmly to a transmission shaft (1) and in openings (215) in a shift disc (21b) connected firmly to the shift sleeve (2b).

15. Multi-gear transmission according to one of claims 12 to 14, **characterised in that** the blocking pawls (722) are arranged in a pawl ring (721).

16. Multi-gear transmission according to one of claims 12 to 15, **characterised in that** the blocking pawls (722) act as a pawl free wheel axially in the direction of the axis of rotation (50).

17. Multi-gear transmission according to one of claims 12 to 15, **characterised in that** the blocking pawls (722) act as a pawl free wheel radially perpendicular to the direction of the axis of rotation (50).

18. Multi-gear transmission according to one of claims 1 to 17, **characterised in that** it can be incorporated into a hub housing (10) or a bottom bracket housing (100).

19. Multi-gear transmission according to one of claims 1 to 18, **characterised in that** the pinions (4a) of the pinion carrier (5a) are in mesh with the pinions (4b) of the pinion carrier (5b).

20. Multi-gear transmission for bicycles which for provision of different gear ratios comprises at least two crown gear trains (a, b) each with at least two crown gears (61a, 62a, 63a, 61b, 62b, 63b), a shift mechanism (7a) for selective connection of the crown gears (61a, 62a, 63a, 61b, 62b, 63b) with fixed and/or rotating transmission elements (1, 31) and a plurality of pinions (4a) which are arranged between the crown gears (3, 9, 61a, 62a, 63a, 61b, 62b, 63b) and mounted on a common pinion carrier (5a, 5b) so as to be rotatable about shafts perpendicular to the axis of rotation of the crown gears (61a, 62a, 63a, 61b, 62b, 63b) and in mesh with the crown gears (61a, 62a, 63a, 61b, 62b, 63b), **characterised in that** the two crown gear trains (a, b) have a common axis of rotation (50) and each pinion (4a) of the pinion carrier (5a, 5b) is in permanent mesh with at least two crown gears (61a, 62a, 63a, 61b, 62b, 63b).

## Revendications

1. Transmission à plusieurs rapports pour bicyclettes qui contient, pour la mise à disposition de différents braquets, au moins deux transmissions à couronnes dentées (a, b) avec respectivement au moins deux couronnes dentées (3, 9, 61a, 62a, 63a, 61b, 62b, 63b), un dispositif de commutation (2 ; 2a, 2b) pour la liaison sélectionnable des couronnes dentées (3, 9, 61a, 62a, 63a, 61b, 62b, 63b) avec des éléments de transmission fixes et/ou rotatifs (1, 11, 11a, 11b, 10, 31) et plusieurs pignons (4a, 4b) disposés entre les couronnes dentées (3, 9, 61a, 62a, 63a, 61b, 62b, 62c) qui sont logés de manière à pouvoir tourner sur respectivement un support de pignon (5a, 5b) autour d'axes (51a, 51b) perpendiculaires à l'axe de rotation des couronnes dentées (3, 9, 61a, 62a, 63a, 61b, 62b, 63b) et sont en engagement avec les couronnes dentées (3, 9, 61a, 62a, 63a, 61b, 62b, 63b), **caractérisée en ce que** les deux transmissions à couronnes dentées (a, b) présentent un axe de rotation commun (50) et chaque pignon (4a, 4b) des supports de pignon (5a, 5b) sont en engagement permanent avec au moins deux couronnes dentées (3, 9, 61a, 62a, 63a, 61b, 62b, 63b).

2. Transmission à plusieurs rapports selon la revendication 1, **caractérisée en ce que** chaque transmission à couronnes dentées (a, b) contient trois couronnes dentées (61a, 62a, 63a, 61b, 62b, 63b) qui sont en engagement permanent avec les pignons afférents (4a, 4b).

3. Transmission à plusieurs rapports selon la revendication 1 ou 2, **caractérisée en ce que** chaque transmission à couronnes dentées (a, b) contient au moins trois pignons (4a, 4b) disposés en étoile autour de l'axe de rotation (50) avec plusieurs étages de pignons (41a, 42a, 43a, 41b, 42b, 43b).

4. Transmission à plusieurs rapports selon l'une quelconque des revendications 1 à 3, **caractérisée en ce que** les supports de pignon (5a, 5b) de la première et deuxième transmission à couronnes dentées (a, b) sont reliés entre eux de manière solidaire en rotation.

5. Transmission à plusieurs rapports selon la revendication 4, **caractérisée en ce que** les supports de pignon (5a, 5b) de la première et deuxième transmission à couronnes dentées (a, b) sont reliés entre eux de manière solidaire en rotation par une douille de liaison (8).

6. Transmission à plusieurs rapports selon l'une quelconque des revendications 1 à 3, **caractérisée en ce qu'**une couronne dentée (63a) de la première transmission à couronnes dentées (a) et une couronne dentée (63b) de la deuxième transmission à couronnes dentées (b) sont reliées entre elles de manière solidaire en rotation par une douille de liaison (8).

7. Transmission à plusieurs rapports selon la revendication 6, **caractérisée en ce que** les deux couronnes dentées (63a, 63b) reliées entre elles de manière solidaire en rotation sont réalisées d'un seul tenant avec la douille de liaison (8).

8. Transmission à plusieurs rapports selon l'une quelconque des revendications 1 à 7, **caractérisée en ce qu'**une troisième transmission à couronnes dentées (C) avec deux couronnes dentées (12, 13) et au moins un pignon (4c) disposé sur un support de pignon (5c) est disposée en aval de la deuxième transmission à couronnes dentées (b).

9. Transmission à plusieurs rapports selon l'une quelconque des revendications 1 à 8, **caractérisée en ce qu'**au moins une transmission à couronnes dentées (a, b) contient un embrayage (15), par lequel les deux couronnes dentées (3, 9) de la transmission à couronnes dentées (a, b) respective ou le support de pignon (5a, 5b, 5c) peut être couplé à la couronne dentée (3, 9, 61a, 61b) afférente.

10. Transmission à plusieurs rapports selon la revendication 8 ou 9, **caractérisée en ce que** la couronne dentée de la troisième transmission à couronnes dentées (c) est reliée par une roue libre (14) à un axe de transmission (1) ou à un boîtier de palier du pédalier (100).

11. Transmission à plusieurs rapports selon l'une quelconque des revendications 1 à 10, **caractérisée en ce que** le dispositif de commutation (2 ; 2a, 2b) contient un disque axial (11, 11a, 11b) concentrique à l'axe de rotation (50) et un disque de commutation (21, 21a, 21b) concentrique à l'axe de rotation (50), le disque axial (11, 11a, 11b) étant logé de manière solidaire en rotation et le disque de commutation (21, 21a, 21b) étant logé de manière à pouvoir tourner autour de l'axe de rotation (50).

12. Transmission à plusieurs rapports selon la revendication 11, **caractérisée en ce que** le disque axial (11, 11a, 11b) et le disque de commutation (21, 21a, 21b) présentent au moins deux rainures (211, 116) disposées concentriquement et des passages (111, 112, 113, 117, 118, 212, 215, 217) ou cavités (214) pour le mouvement de tiges de commutation (115) ou cliquets d'arrêt (722).

13. Transmission à plusieurs rapports selon la revendication 12, **caractérisée en ce que** les cliquets d'arrêt (722) sont disposés dans un disque de commutation (21) relié fixement à la douille de commutation (2) et dans des passages (111) d'un disque axial (11b) relié fixement à un axe de transmission (1).

14. Transmission à plusieurs rapports selon la revendication 12, **caractérisée en ce que** les cliquets d'arrêt (722) sont disposés dans un disque axial (11) relié fixement à un axe de transmission (1) et dans des passages (215) d'un disque de commutation (21b) relié fixement à la douille de commutation (2b).

15. Transmission à plusieurs rapports selon l'une quelconque des revendications 12 à 14, **caractérisée en ce que** les cliquets d'arrêt (722) sont disposés sur un anneau de cliquet (721).

16. Transmission à plusieurs rapports selon l'une quelconque des revendications 12 à 15, **caractérisée en ce que** les cliquets d'arrêt (722) agissent comme une roue libre à cliquet axialement en direction de l'axe de rotation (50).

17. Transmission à plusieurs rapports selon l'une quelconque des revendications 12 à 15, **caractérisée en ce que** les cliquets d'arrêt (722) agissent comme une roue libre à cliquet radialement perpendiculairement à la direction de l'axe de rotation (50).

18. Transmission à plusieurs rapports selon l'une quelconque des revendications 1 à 17, **caractérisée en ce qu'**elle peut être intégrée dans un carter de moyeu (10) ou un boîtier de palier du pédalier (100).

19. Transmission à plusieurs rapports selon l'une quelconque des revendications 1 à 18, **caractérisée en ce que** les pignons (4a) du support de pignon (5a) sont en engagement avec les pignons (4b) du support de pignon (5b).

20. Transmission à plusieurs rapports pour bicyclettes qui contient, pour la mise à disposition différents braquets, au moins deux transmissions à couronnes dentées (a, b) avec respectivement au moins deux couronnes dentées (61a, 62a, 63a, 61b, 62b, 63b), un dispositif de commutation (7a) pour la liaison sélectionnable des couronnes dentées (61a, 62a, 63a, 61b, 62b, 63b) avec des éléments de transmission fixes et/ou rotatifs (1, 31) et plusieurs pignons (4a) disposés entre les couronnes dentées (3, 9, 61a, 62a, 63a, 61b, 62b, 63b) qui sont logés de manière à pouvoir tourner sur respectivement un support de pignon (5a, 5b) autour d'axes perpendiculaires à l'axe de rotation des couronnes dentées (61a, 62a, 63a, 61b, 62b, 63b) et sont en engagement avec les couronnes dentées (61a, 62a, 63a, 61b, 62b, 63b), **caractérisée en ce que** les deux transmissions à couronne dentée (a, b) présentent un axe de rotation commun (50) et chaque pignon (4a) du support de pignon (5a, 5b) est en engagement permanent avec au moins deux couronnes dentées (61a, 62a, 63a, 61b, 62b, 63b).
